(19) Europäisches Patentamt
European Patent Office
Office européen des brevets

(11) **EP 4 131 093 A1**

(12) **EUROPEAN PATENT APPLICATION**
published in accordance with Art. 153(4) EPC

(43) Date of publication:
**08.02.2023 Bulletin 2023/06**

(21) Application number: **21776159.2**

(22) Date of filing: **22.03.2021**

(51) International Patent Classification (IPC):
**G06Q 10/00** (2006.01)    **G06Q 50/10** (2012.01)

(52) Cooperative Patent Classification (CPC):
**G06Q 10/00; G06Q 50/10**

(86) International application number:
**PCT/JP2021/011743**

(87) International publication number:
**WO 2021/193547 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.03.2020 JP 2020056171**

(71) Applicant: **Daikin Industries, Ltd.
Osaka-shi, Osaka 530-8323 (JP)**

(72) Inventors:
• **OHGA, Takahiro
Osaka-shi, Osaka 530-8323 (JP)**
• **TAKEUCHI, Toshifumi
Osaka-shi, Osaka 530-8323 (JP)**

(74) Representative: **Global IP Europe
Patentanwaltskanzlei
Pfarrstraße 14
80538 München (DE)**

(54) **AREA RECOMMENDATION DEVICE**

(57)    It is difficult for a target person to select a preferred seat from a plurality of recommended seats because there is no determination material if reasons for recommendation are not presented when the seats are recommended. The region recommendation device (100) determines one or more recommended regions (R81) to be recommended to a target person from among a plurality of target regions in a target space. The region recommendation device (100) includes a region information acquiring unit (1), a recommended region determin-ing unit (50), and a presenting unit (92). The region information acquiring unit (1) acquires region information (2) that is information regarding the target regions. The recommended region determining unit (50) determines the one or more recommended regions (R81) on the basis of the region information (2). The presenting unit (92) presents, to the target person, the one or more recommended regions (R81) and a recommendation reason (R82) for determining the one or more recommended regions (R81).

FIG. 2A

**Description**

**TECHNICAL FIELD**

The present disclosure relates to a region recommendation device.

**BACKGROUND ART**

There is a technique of recommending a comfortable seat for a target person at the time of entering a room in a free address space such as a shared office. The apparatus disclosed in PTL 1 (Japanese Unexamined Patent Application Publication No. 2014-214975) recommends a plurality of seats that are comfortable for a target person.

**SUMMARY OF INVENTION**

<Technical Problem>

It is difficult for a target person to select a preferred seat from a plurality of recommended seats because there is no determination material if reasons for recommendation are not presented when the seats are recommended.

<Solution to Problem>

A region recommendation device according to a first aspect determines one or more recommended regions to be recommended to a target person from among a plurality of target regions in a target space. The region recommendation device includes a region information acquiring unit, a recommended region determining unit, and a presenting unit. The region information acquiring unit acquires region information that is information regarding the target regions. The recommended region determining unit determines the one or more recommended regions on the basis of the region information. The presenting unit presents, to the target person, the one or more recommended regions and a recommendation reason for determining the one or more recommended regions.

In the region recommendation device according to the first aspect, the presenting unit presents, in addition to the one or more recommended regions, the recommendation reason for determining the one or more recommended regions to the target person. Therefore, the target person can select a preferred region from the plurality of recommended regions in consideration of the recommendation reason.

A region recommendation device according to a second aspect is the region recommendation device according to the first aspect, in which the recommended region determining unit calculates a first degree of similarity indicating a degree of similarity between past information including past region information that is the region information of a past and current information including current region information that is the region information of present, regarding the target person and the target regions, and determines the one or more recommended regions.

A region recommendation device according to a third aspect is the region recommendation device according to the second aspect, further including a biological information acquiring unit that acquires biological information of the target person. The past information further includes past biological information that is the biological information of the past regarding the target person authenticated by a target person authenticating unit. The current information further includes current biological information that is the biological information of the present regarding the target person.

A region recommendation device according to a fourth aspect is the region recommendation device according to the second or third aspect, in which the region information includes region information items. The region information items include at least one of a temperature, a humidity, an illuminance, a color of illumination, a noise, a type of chair, a type of table, personal use or shared use, whether a window is near, a population density, presence or absence of an outlet, and proximity of OA equipment. The recommended region determining unit further calculates, for each of the region information items, a second degree of similarity indicating a degree of similarity between the past region information and the current region information.

In the region recommendation device according to the fourth aspect, the recommended region determining unit further calculates, for each of the region information items, the second degree of similarity indicating the degree of similarity between the past region information and the current region information. Therefore, the region recommendation device may use the second degree of similarity for each of the region information items as the recommendation reason. As a result, the target person has more determination material, and can easily select a preferred region from the plurality of recommended regions.

A region recommendation device according to a fifth aspect is the region recommendation device according to the fourth aspect, further including a desired condition acquiring unit that acquires a desired condition of the target person. The desired condition includes a priority region information item that is the region information item to which the target person has priority. The recommended region determining unit calculates the second degree of similarity regarding the priority region information item and determines the one or more recommended regions.

In the region recommendation device according to the fifth aspect, if the target person has the desired condition, the recommended region determining unit calculates the second degree of similarity regarding the priority region information item and determines the one or more recommended regions. Therefore, the region recommendation device may determine the one or more recommended regions in consideration of only the priority region information item. As a result, the target person can receive region recommendation in consideration of only the preferred region information item.

A region recommendation device according to a sixth aspect is the region recommendation device according to any of the first to fifth aspects, in which the region information includes region information items. The region information items include at least one of a temperature, a humidity, an illuminance, a color of illumination, a noise, a type of chair, a type of table, personal use or shared use, whether a window is near, a population density, presence or absence of an outlet, and proximity of OA equipment. The recommendation reason presented by the presenting unit includes at least one or more of the region information items regarding the one or more recommended regions.

A region recommendation device according to a seventh aspect is the region recommendation device according to any of the first to sixth aspects, in which the presenting unit further presents a use history of the target person on the basis of the region information regarding the target person.

In the region recommendation device according to the seventh aspect, the presenting unit further presents the use history of the target person. Therefore, the target person can select a recommended region with reference to the use history of the past.

A region recommendation device according to an eighth aspect is the region recommendation device according to any of the first to seventh aspects, further including a selected region information acquiring unit that acquires selected region information that is position information of a region selected by the target person. The presenting unit further presents the region information regarding the selected region information.

In the region recommendation device according to the eighth aspect, the presenting unit presents the region information regarding the selected region information acquired from the target person. Therefore, the target person can also refer to the region information on currently unused target regions other than the one or more recommended regions.

## BRIEF DESCRIPTION OF DRAWINGS

Fig. 1 is a plan view of a target space.
Fig. 2A is a configuration diagram of a region recommendation device.
Fig. 2B is a configuration diagram of the region recommendation device.
Fig. 2C is a configuration diagram of the region recommendation device.
Fig. 2D is a configuration diagram of the region recommendation device.
Fig. 3 is a diagram illustrating region basic information.
Fig. 4 is a diagram illustrating user information.
Fig. 5 is a diagram illustrating usage information.
Fig. 6 is a diagram illustrating environmental information.
Fig. 7 is a diagram illustrating region feature information.
Fig. 8 is a diagram illustrating biological information.
Fig. 9 is a diagram illustrating a screen of signage.
Fig. 10A is a flowchart of a recommended region determining process.
Fig. 10B is the flowchart of the recommended region determining process.
Fig. 11 is a diagram illustrating past usage information.
Fig. 12 is a diagram illustrating past information.
Fig. 13 is a diagram illustrating past multi-dimensional information points.
Fig. 14A is a diagram illustrating past multi-dimensional information points in a multi-dimensional space.
Fig. 14B illustrates past multi-dimensional information points and multi-dimensional comfortable region after data cleaning.
Fig. 14C illustrates a multi-dimensional comfortable region centroid.
Fig. 14D illustrates current multi-dimensional information points in a multi-dimensional space.
Fig. 14E is a diagram illustrating a first distance between a multi-dimensional comfortable region centroid and current multi-dimensional information points.
Fig. 14F is a diagram illustrating a second distance between the multi-dimensional comfortable region centroid and current multi-dimensional information points.
Fig. 15 is a diagram illustrating usage information regarding currently unused target regions.

Fig. 16 is a diagram illustrating current information.
Fig. 17 illustrates current multi-dimensional information points.
Fig. 18 is a diagram illustrating a screen of signage.
Fig. 19 is a diagram illustrating a screen of signage.
Fig. 20 is a diagram illustrating a screen of signage.
Fig. 21 is a diagram illustrating a screen of signage.

## DESCRIPTION OF EMBODIMENTS

(1) Overall Configuration

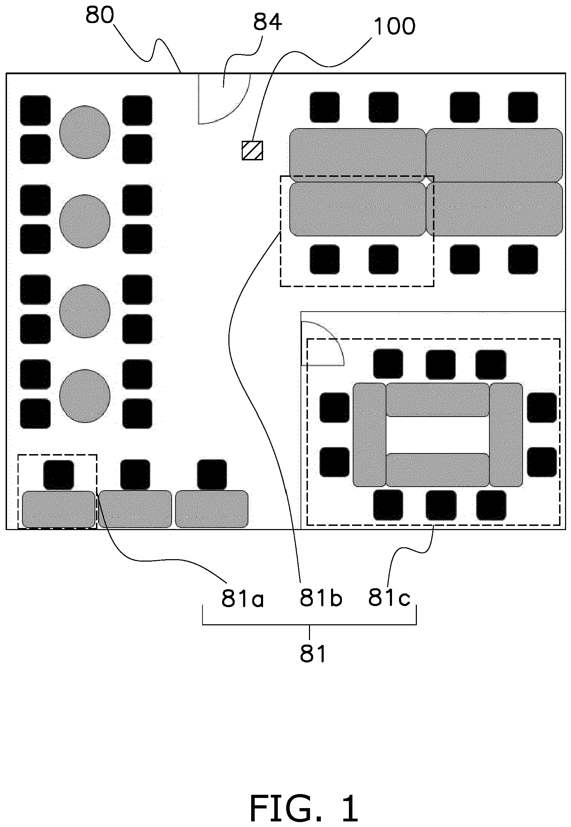

A region recommendation device 100 determines one or more recommended regions R81 to be recommended to a target person from among a plurality of target regions 81 in a target space 80. The target space 80 is, for example, a free address space such as a shared office. Fig. 1 illustrates a plan view of the target space 80. The region recommendation device 100 is installed near an entrance 84 of the target space 80, for example. The target regions 81 are a plurality of regions provided to users of the target space 80. The target regions 81 are given regions such as seats, rooms, or spaces. In Fig. 1, a single-person seat 81a, a two-person seat 81b, and a meeting room 81c are illustrated as examples of the target regions 81. Here, the term "user" is used to mean a user of the target space 80. The term "target person" is used to mean a person who receives region recommendation by the region recommendation device 100 among users of the target space 80.

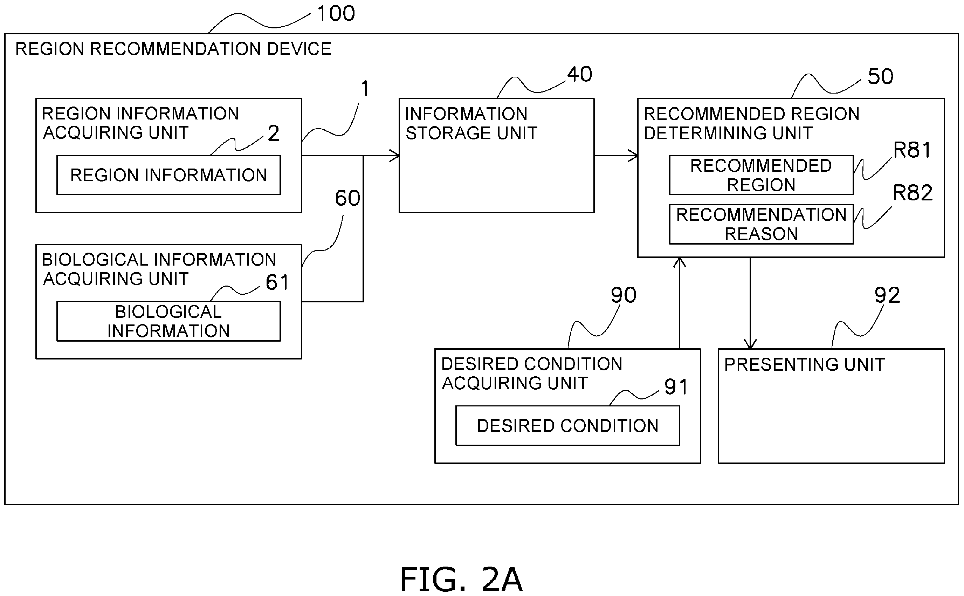

As illustrated in Fig. 2A, the region recommendation device 100 mainly includes a region information acquiring unit 1, a biological information acquiring unit 60, an information storage unit 40, a recommended region determining unit 50, a desired condition acquiring unit 90, and a presenting unit 92.

The region recommendation device 100 further includes a control arithmetic device and a storage device. A processor such as a CPU or a GPU can be used as the control arithmetic device. The control arithmetic device reads a program stored in the storage device and performs predetermined image processing and arithmetic processing in accordance with the program. Furthermore, the control arithmetic device can write an arithmetic result into the storage device and read information stored in the storage device according to the program. The region information acquiring unit 1, the biological information acquiring unit 60, the information storage unit 40, the recommended region determining unit 50, the desired condition acquiring unit 90, and the presenting unit 92 are various functional blocks implemented by the control arithmetic device.

(2) Detailed Configuration

(2-1) Region Information Acquiring Unit

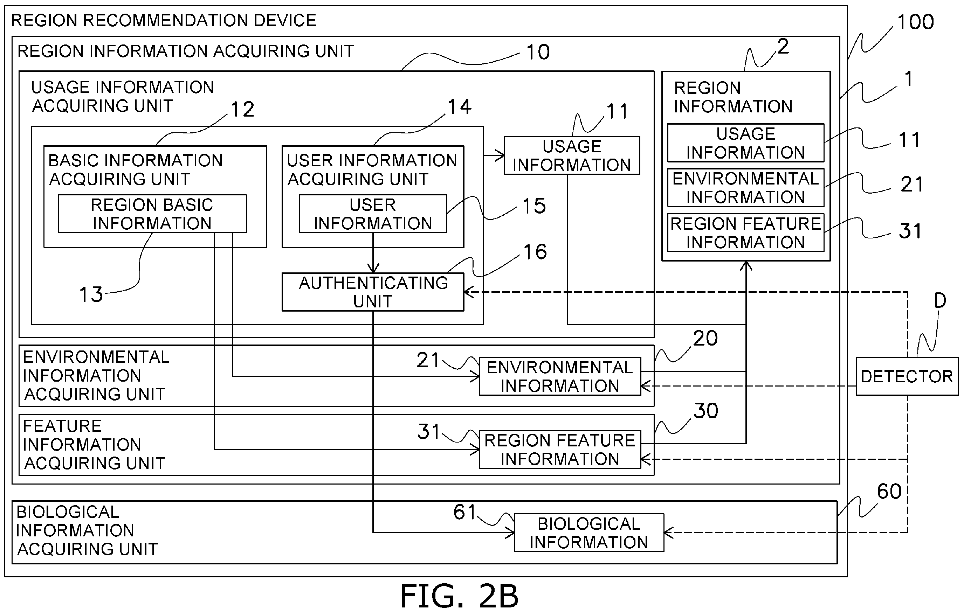

The region information acquiring unit 1 acquires region information 2 that is information on target regions 81. The region information 2 includes region information items 2a. The region information items 2a include at least one of a temperature, a humidity, an illuminance, a color of illumination, a noise, a type of chair, a type of table, personal use or shared use, whether a window is near, a population density, the presence or absence of an outlet, and the proximity of OA equipment. Fig. 2B is a diagram illustrating details of the region information acquiring unit 1 and the biological information acquiring unit 60 in Fig. 2A. As illustrated in Fig. 2B, the region information acquiring unit 1 includes a usage information acquiring unit 10, an environmental information acquiring unit 20, and a feature information acquiring unit 30. The region information 2 includes usage information 11 acquired from the usage information acquiring unit 10, environmental information 21 acquired from the environmental information acquiring unit 20, and region feature information 31 acquired from the feature information acquiring unit 30.

(2-1-1) Usage Information Acquiring Unit

The usage information acquiring unit 10 acquires the usage information 11 regarding usage situations of persons in the target regions 81. As illustrated in Fig. 2B, the usage information acquiring unit 10 includes a basic information acquiring unit 12, a user information acquiring unit 14, and an authenticating unit 16.

(2-1-1-1) Basic Information Acquiring Unit

As illustrated in Fig. 2B, the basic information acquiring unit 12 acquires region basic information 13 that is basic information regarding the target regions 81.

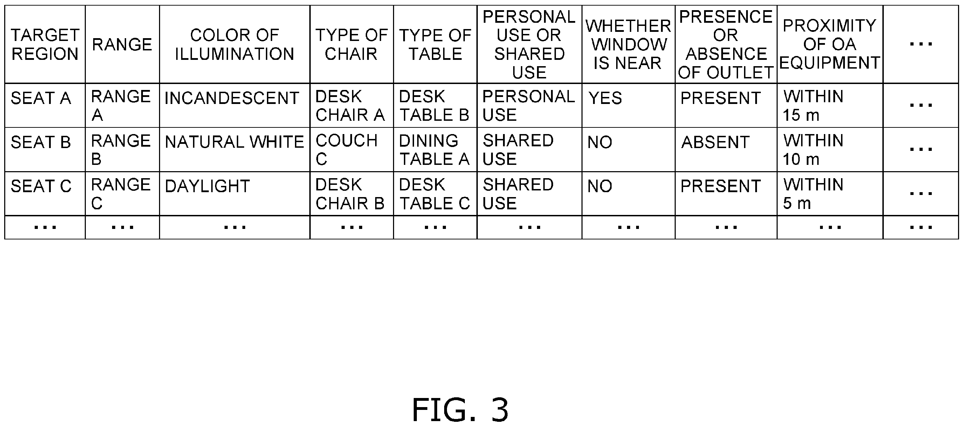

Fig. 3 illustrates an example of the region basic information 13. The region basic information 13 includes "target region" and "range" as main items. Items subsequent to "color of illumination" will be described later.

The names of the target regions 81 are stored as "target region". In Fig. 3, "seat A" and the like are stored.

Coordinate ranges of "target region" are stored as "range". In Fig. 3, "range A" and the like are stored.

The region basic information 13 has content that can be set in advance.

(2-1-1-2) User Information Acquiring Unit

As illustrated in Fig. 2B, the user information acquiring unit 14 acquires user information 15 that is information regarding users of the target space 80.

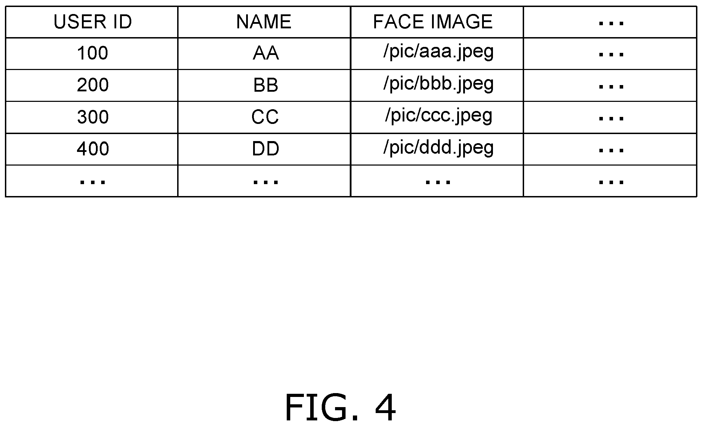

Fig. 4 illustrates an example of the user information 15. The user information 15 includes "user ID", "name", and "face image" as main items.

The user information acquiring unit 14 registers users of the target space 80. The user information acquiring unit 14 receives information such as "name" and "face image" from the users, and issues "user ID" that uniquely identifies the users. These pieces of information are stored in the user information 15. In Fig. 4, "100" and the like are stored as "user ID", "AA" and the like are stored as "name", and "/pic/aaa.jpeg" and the like are stored as "face images".

(2-1-1-3) Authenticating Unit

The authenticating unit 16 authenticates users in the target space 80. For example, face authentication, fingerprint authentication, password authentication, or the like is used for authentication. In the present embodiment, the authenticating unit 16 authenticates the users by face authentication. Specifically, as illustrated in Fig. 2B, the authenticating unit 16 authenticates the users on the basis of face images detected in the target space 80 and the user information 15. For example, an object detection camera or the like is used to detect the face images. In Fig. 2B, an object detection camera or the like is illustrated as a detector D.

The authenticating unit 16 can output user IDs of the authenticated users.

(2-1-1-4) Usage Information

As illustrated in the Fig. 2B, the usage information acquiring unit 10 acquires the usage information 11 from the region basic information 13, the user information 15, and the function of the authenticating unit 16.

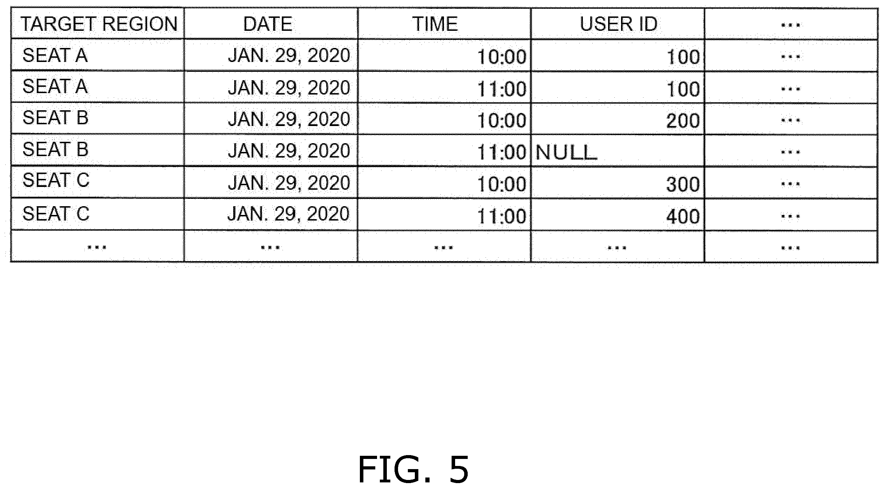

Fig. 5 illustrates an example of the usage information 11. The usage information 11 includes "target region", "date", "time", and "user ID" as main items.

The "target region" is acquired from "target region" of the region basic information 13. In Fig. 5, "seat A" and the like are stored.

A date on which the usage information 11 is acquired is stored as "date". In Fig. 5, "Jan. 29, 2020" is stored. "Date" is acquired from, for example, an internal timer of the control arithmetic device included in the region recommendation device 100.

A time at which the usage information 11 is acquired is stored as "time". In the present embodiment, the usage information 11, and the environmental information 21, the region feature information 31, and biological information 61, which will be described later, are acquired every hour. Therefore, in Fig. 5, the time of every hour such as "10:00" and "11:00" is stored. "Time" is acquired from, for example, the internal timer or the like of the control arithmetic device included in the region recommendation device 100.

User IDs of users who use "target region" at "time" and on "date" are stored as "user ID". In Fig. 5, "100", "NULL", and the like are stored. "NULL" indicates that "target region" is not used. "User ID" is acquired from the region basic information 13, the user information 15, and the function of the authenticating unit 16.

Specifically, a method of acquiring the usage information 11 acquired at 11:00 on Jan. 29, 2020 will be described. First, the record in the first row of the region basic information 13 illustrated in Fig. 3 is acquired. "Target region" of the record is "seat A". This "seat A" is stored as "target region" of the usage information 11. Since the usage information 11 is acquired at 11:00 on Jan. 29, 2020, "Jan. 29, 2020" and "11:00" are stored as "date" and "time" of the usage information 11, respectively. In order to acquire "user ID" of the usage information 11, the usage information acquiring unit 10 authenticates a user in "range A" using the authenticating unit 16 since "range" of the record in the first row of the region basic information 13 illustrated in Fig. 3 is "range A". Since "100" is output as "user ID" as a result of the authentication, "100" is stored as "user ID" of the usage information 11. The record acquired here corresponds to the record in the second row of the usage information 11 in Fig. 5. When this process is performed on all records of the region basic information 13, the usage information 11 at 11:00 on Jan. 29, 2020 can be acquired.

The following can be found from the usage information 11 in Fig. 5. "Seat A" is used by a user with user ID "100" at the time points "10:00" and "11 :00". "Seat B" is used by a user with user ID "200" at "10:00", but is not used by anyone at "11:00". "Seat C" is used by a user with user ID "300" at "10:00", but is used by a user with user ID "400" at "11:00".

(2-1-2) Environmental Information Acquiring Unit

As illustrated in Fig. 2B, the environmental information acquiring unit 20 acquires the environmental information 21 regarding an indoor environment in the target regions 81. The environmental information 21 includes at least one of a temperature, a humidity, an illuminance, a color of illumination, and a noise.

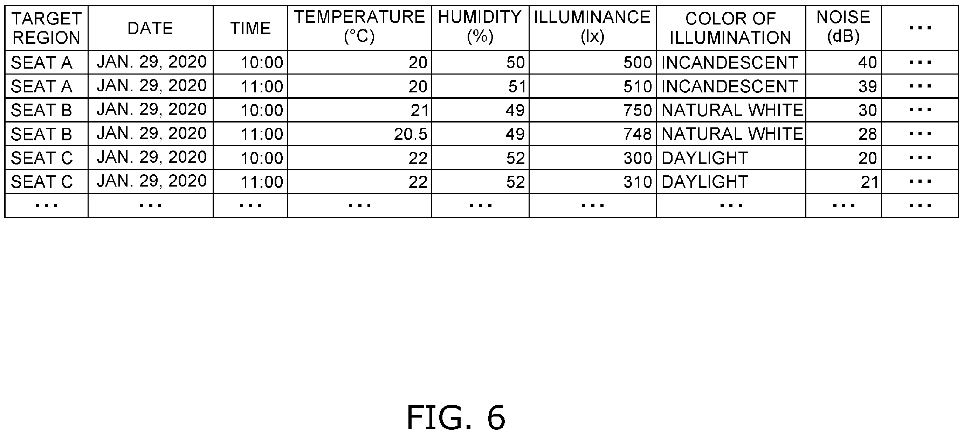

Fig. 6 illustrates an example of the environmental information 21. The environmental information 21 includes, as main items, "target region", "date", "time", "temperature", "humidity", "illuminance", "color of illumination", and "noise".
"Target region", "date", and "time" are as described above.
The temperature, the humidity, the illuminance, and the noise of "target region" at "time" and on "date" are stored as "temperature", "humidity", "illuminance", and "noise".
The color of illumination of "target region" is stored as "color of illumination".
"Temperature" is acquired from, for example, a temperature sensor or the like. In Fig. 6, values ranging from 20°C to 22°C are stored.
"Humidity" is acquired from, for example, a humidity sensor or the like. In Fig. 6, values ranging from 49% to 52% are stored.
"Illuminance" is acquired from, for example, an illuminance sensor or the like. In Fig. 6, values ranging from 300 lx to 750 lx are stored.
"Color of illumination" is acquired from "color of illumination" of the region basic information 13 illustrated in Fig. 3. In Fig. 6, "incandescent", "natural white", and "daylight" are stored.
"Noise" is acquired from, for example, a sound collecting microphone or the like. In Fig. 6, values ranging from 20 dB to 40 dB are stored.
In Fig. 2B, the above temperature sensor and the like are illustrated as the detector D.
Specifically, a method of acquiring the environmental information 21 acquired at 11:00 on Jan. 29, 2020 will be described. First, the record in the first row of the region basic information 13 illustrated in Fig. 3 is acquired. "Target region" of the record is "seat A". This "seat A" is stored as "target region" of the environmental information 21. Since the environmental information 21 is acquired at 11:00 on Jan. 29, 2020, "Jan. 29, 2020" and "11:00" are stored as "date" and "time" of the environmental information 21, respectively. Values acquired from the temperature sensor and the like at 11:00 on Jan. 29, 2020 are stored as "temperature", "humidity", "illuminance", and "noise" of the environmental information 21. Since "color of illumination" in the record in the first row of the region basic information 13 illustrated in Fig. 3 is "incandescent", "incandescent" is stored as "color of illumination" of the environmental information 21. The record acquired here corresponds to the record in the second row of the environmental information 21 in Fig. 6. When this process is performed on all records of the region basic information 13, the environmental information 21 at 11:00 on Jan. 29, 2020 can be acquired.

(2-1-3) Feature Information Acquiring Unit

As illustrated in Fig. 2B, the feature information acquiring unit 30 acquires the region feature information 31 regarding equipment and peripheral information in the target regions 81.
The region feature information 31 includes at least one of a type of chair, a type of table, a personal seat or not, whether a window is near, a population density, the presence or absence of an outlet, and the proximity of OA equipment in the target regions 81.

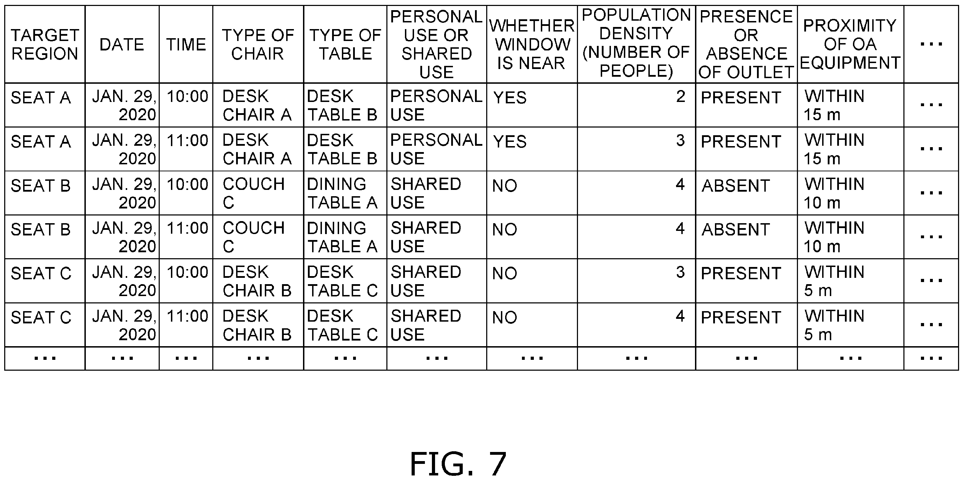

Fig. 7 illustrates an example of the region feature information 31. The region feature information 31 includes, as main items, "target region", "date", "time", "type of chair", "type of table", "personal use or shared use", "whether window is near", "population density", "presence or absence of outlet", and "proximity of OA equipment".
The type of chair, the type of table, a personal seat or not, whether a window is near, the presence or absence of an outlet, and the proximity of OA equipment in "target region" are stored as "type of chair", " type of table", "personal use or shared use", "whether window is near", "presence or absence of outlet", and "proximity of OA equipment".
The population density of "target region" at "time" and on "date" is stored as "population density".
"Target region", "date", and "time" are as described above.
"Type of chair", "type of table", "personal use or shared use", "whether window is near", "presence or absence of outlet", and "proximity of OA equipment" are acquired from "type of chair", "type of table", "personal use or shared use", "whether window is near", "presence or absence of outlet", and "proximity of OA equipment" of the region basic information 13 illustrated in Fig. 3.
In Fig. 7, "desk chair A" and the like are stored as "type of chair". "Desk chair A" and the like are values categorized in advance.
In Fig. 7, "desk table B" and the like are stored as "type of table". "Desk table B" and the like are values categorized in advance.

In Fig. 7, "personal use" and "shared use" are stored as "personal use or shared use".

In Fig. 7, "Yes" and "No" are stored as "whether window is near".

In Fig. 7, "presence" and "absence" are stored as "presence or absence of outlet".

In Fig. 7, "within 15 m" and the like are stored as "proximity of OA equipment". "Within 15 m" and the like are values obtained by categorizing the distances from the target regions 81 to OA equipment in advance.

"Population density" is the number of people within predetermined ranges from the target regions 81. "Population density" is calculated using an object detection camera or the like, for example. In Fig. 2B, an object detection camera or the like is illustrated as a detector D. In Fig. 7, values ranging from 2 to 4 people are stored.

Specifically, a method of acquiring the region feature information 31 acquired at 11:00 on Jan. 29, 2020 will be described. First, the record in the first row of the region basic information 13 illustrated in Fig. 3 is acquired. "Target region" of the record is "seat A". This "seat A" is stored as "target region" of the region feature information 31. Since the region feature information 31 is acquired at 11:00 on Jan. 29, 2020, "Jan. 29, 2020" and "11:00" are stored as "date" and "time" of the region feature information 31, respectively. "Desk chair A" and the like that are values of the same item name of the record in the first row of the region basic information 13 are stored as "type of chair", "type of table", "personal use or shared use", "whether window is near", "presence or absence of outlet", and "proximity of OA equipment" of the region feature information 31. Values calculated using an object detection camera or the like at 11:00 on Jan. 29, 2020 are stored as "population density" of the region feature information 31. The record acquired here corresponds to the record in the second row of the region feature information 31 in Fig. 7. When this process is performed on all records of the region basic information 13, the region feature information 31 at 11:00 on Jan. 29, 2020 can be acquired.

(2-2) Biological Information Acquiring Unit

As illustrated in Fig. 2B, the biological information acquiring unit 60 acquires the biological information 61 of a person in the target space 80.

The biological information 61 includes at least one of a body surface temperature, a core body temperature, and a pulse.

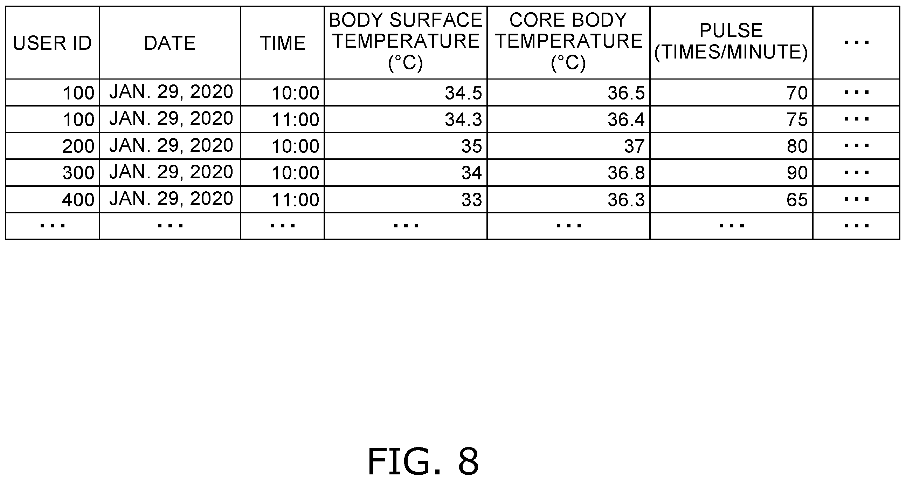

Fig. 8 illustrates an example of the biological information 61. The biological information 61 includes, as main items, "user ID", "date", "time", "body surface temperature", "core body temperature", and "pulse".

"User ID" is acquired from the user information 15 and the function of the authenticating unit 16. In Fig. 8, "100" and the like are stored.

"Date" and "time" are as described above.

The body surface temperature, the core body temperature, and the pulse of a user indicated by "user ID" at "time" and on "date" are stored as "body surface temperature", "core body temperature", and "pulse", respectively.

"Body surface temperature" is acquired from, for example, a thermocamera or the like. In Fig. 8, values ranging from 33°C to 35°C are stored.

"Core body temperature" is acquired from, for example, a non-contact vital sensor or the like. In Fig. 8, values ranging from 36.3°C to 37°C are stored.

"Pulse" is acquired from, for example, a non-contact vital sensor or the like. In Fig. 8, values ranging from 65 times/minute to 90 times/minute are stored.

In Fig. 2B, the above thermocamera or the like is illustrated as the detector D.

Specifically, a method of acquiring the biological information 61 acquired at 11:00 on Jan. 29, 2020 will be described. The biological information acquiring unit 60 authenticates users in the target space 80 by the function of the authenticating unit 16. For example, it is assumed that a user whose "user ID" is "100" is authenticated. At this time, "100" is stored as "user ID" of the biological information 61. Since the biological information 61 is acquired at 11:00 on Jan. 29, 2020, "Jan. 29, 2020" and "11:00" are stored as "date" and "time" of the biological information 61, respectively. Values acquired from a thermocamera or the like at 11:00 on Jan. 29, 2020 are stored as "body surface temperature", "core body temperature", and "pulse". The record acquired here corresponds to the record in the second row of the biological information 61 in Fig. 8. When this process is performed for all users in the target space 80, the biological information 61 at 11:00 on Jan. 29, 2020 can be acquired.

(2-3) Information Storage Unit

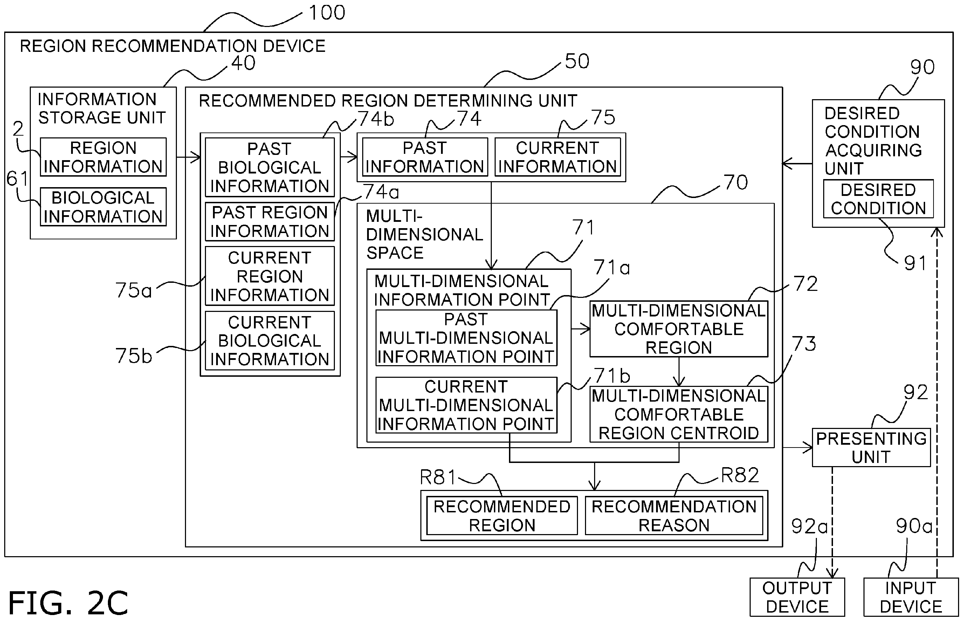

Fig. 2C is a diagram illustrating details of the information storage unit 40, the recommended region determining unit 50, the desired condition acquiring unit 90, and the presenting unit 92 in Fig. 2A. As illustrated in Fig. 2C, the information storage unit 40 stores the region information 2 acquired by the region information acquiring unit 1 and the biological information 61 acquired by the biological information acquiring unit 60. These pieces of information are stored in the storage device included in the region recommendation device 100.

(2-4) Recommended Region Determining Unit

As illustrated in Fig. 2C, when a target person receives region recommendation, the recommended region determining unit 50 determines the one or more recommended regions R81 on the basis of the region information 2.

Specifically, the recommended region determining unit 50 calculates a first degree of similarity SM1 indicating a degree of similarity between past information 74 including past region information 74a that is the region information 2 of the past and current information 75 including current region information 75a that is the region information 2 of the present, regarding the target person and the target regions 81, and determines the one or more recommended regions R81. The past information 74 further includes past biological information 74b that is the biological information 61 of the past regarding the target person. The current information 75 further includes current biological information 75b that is the biological information 61 of the present regarding the target person.

The past region information 74a, which is the region information 2 of the past regarding the target person and the target regions 81, is the region information 2 regarding the target person and the target regions 81 stored before the date and time when the target person receives the region recommendation. The past biological information 74b, which is the biological information 61 of the past regarding the target person, is the biological information 61 regarding the target person stored before the date and time when the target person receives the region recommendation. The recommended region determining unit 50 joins and unifies the past region information 74a and the past biological information 74b to create the past information 74. The recommended region determining unit 50 quantifies the past information 74 to acquire past multi-dimensional information points 71a. Since the past multi-dimensional information points 71a are quantified, they can be mapped to a multi-dimensional space 70 having each item of the past multi-dimensional information points 71a as an axis.

The current region information 75a, which is the region information 2 of the present regarding the target person and the target regions 81, is the region information 2 regarding the target person and the unused target regions 81 at the date and time when the target person receives the region recommendation. The current biological information 75b, which is the biological information 61 of the present regarding the target person, is the biological information 61 regarding the target person at the date and time when the target person receives the region recommendation. The recommended region determining unit 50 joins and unifies the current region information 75a and the current biological information 75b to create the current information 75. The recommended region determining unit 50 quantifies the current information 75 to acquire current multi-dimensional information points 71b. Since the current multi-dimensional information points 71b are quantified, they can be mapped to the multi-dimensional space 70 having each item of the current multi-dimensional information points 71b as an axis.

The recommended region determining unit 50 further performs data cleaning such as outlier exclusion on the past multi-dimensional information points 71a, and defines a region in the multi-dimensional space 70 including the past multi-dimensional information points 71a after the data cleaning as a multi-dimensional comfortable region 72. When the multi-dimensional comfortable region 72 is defined, a multi-dimensional comfortable region centroid 73 that is the centroid of the past multi-dimensional information points 71a included in the multi-dimensional comfortable region 72 is calculated. Then, a first distance D1 is defined in the multi-dimensional space 70 as the first degree of similarity SM1 indicating the degree of similarity, and the first distance D1 between the multi-dimensional comfortable region centroid 73 and each of the current multi-dimensional information points 71b is calculated. The recommended region determining unit 50 determines, as the one or more recommended regions R81, one or more target regions 81 associated with one or more current multi-dimensional information points 71b for which the first distance D1 from the multi-dimensional comfortable region centroid 73 is close.

The recommended region determining unit 50 further calculates a second degree of similarity SM2 indicating a degree of similarity, for each of the region information items 2a, between the past region information 74a and the current region information 75a. Specifically, the recommended region determining unit 50 defines a second distance D2 as the second degree of similarity SM2 indicating the degree of similarity in the multi-dimensional space 70. The recommended region determining unit 50 calculates, for each of the region information items 2a, the second distance D2 between the multi-dimensional comfortable region centroid 73 calculated from the past region information 74a and each of the current multi-dimensional information points 71b.

If a desired condition 91 described later is acquired, the recommended region determining unit 50 calculates the second degree of similarity SM2 regarding a priority region information item 2b described later, and determines the recommended region R81. Specifically, if the desired condition 91 is acquired, the recommended region determining unit 50 determines, as the one or more recommended regions R81, one or more target regions 81 associated with one or more current multi-dimensional information points 71b for which the second distance D2 regarding the priority region information item 2b from the multi-dimensional comfortable region centroid 73 is close.

Details of a recommended region determining process will be described later.

(2-5) Desired Condition Acquiring Unit 90

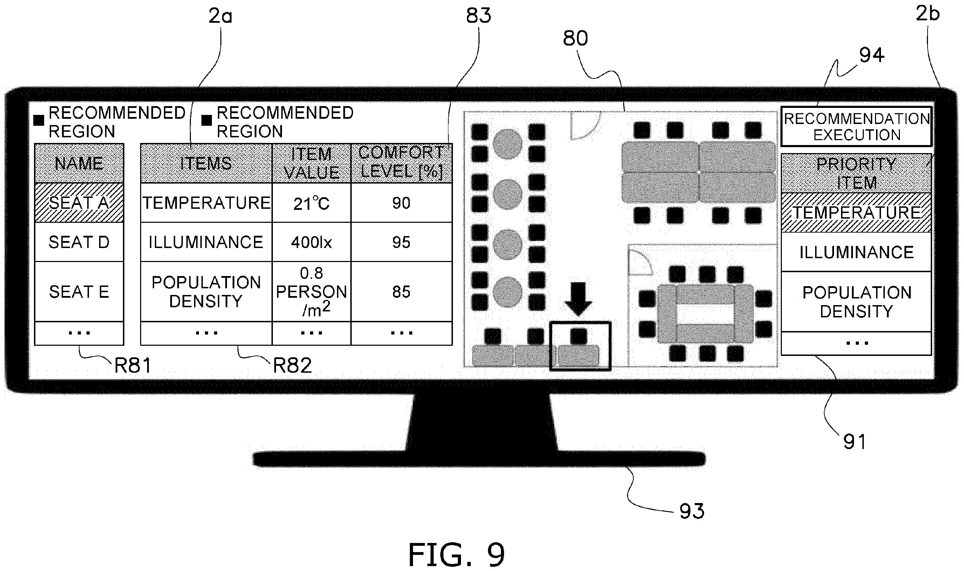

The desired condition acquiring unit 90 acquires the desired condition 91 of the target person. The desired condition 91 includes the priority region information item 2b that is a region information item 2a to which the target person has priority. For example, if the target person desires to receive region recommendation by giving priority to the temperature, the target person sets the desired condition 91 with the temperature that is a region information item 2a as the priority region information item 2b. The desired condition 91 may be set as appropriate. As illustrated in Fig. 2C, the desired condition acquiring unit 90 receives an instruction to start the recommended region determining process and the desired condition 91 from the target person through an input device 90a, and transmits the instruction and the desired condition 91 to the recommended region determining unit 50. The input device 90a is, for example, a screen of signage 93 including a touch panel. Fig. 9 illustrates the screen of the signage 93. In Fig. 9, a recommendation execution button 94 and the desired condition 91 are illustrated as those related to the desired condition acquiring unit 90. In the desired condition 91, the temperature among the region information items 2a is set as the priority region information item 2b. To set the priority region information item 2b, for example, the region information item 2a to be prioritized is touched on the screen of the signage 93. When the target person touches the recommendation execution button 94, the recommended region determining process is started by the function of the desired condition acquiring unit 90.

(2-6) Presenting Unit

The presenting unit 92 presents, to the target person, the one or more recommended regions R81 and a recommendation reason R82 for which the one or more recommended regions R81 are determined. The recommendation reason R82 presented by the presenting unit 92 includes at least one or more region information items 2a regarding the one or more recommended regions R81. The presenting unit 92 performs screen presentation, audio presentation, or the like. In the present embodiment, a case of screen presentation is assumed. As illustrated in Fig. 2C, the presenting unit 92 receives a layout diagram (not illustrated) of the target space 80, the one or more recommended regions R81, and the recommendation reason R82 for determining the one or more recommended regions R81 from the recommended region determining unit 50, and presents the layout diagram, the one or more recommended regions R81, and the recommendation reason R82 on an output device 92a. The output device 92a is, for example, a screen of the signage 93 including a touch panel. Fig. 9 illustrates the screen of the signage 93. Fig. 9 illustrates the layout diagram of the target space 80, recommended regions R81, and the recommendation reason R82 as those related to the presenting unit 92. As the recommended regions R81, names of a plurality of recommended regions R81 such as "seat A" are presented. The plurality of recommended regions R81 presented here indicate that the recommendation order is higher as one goes to the top. In Fig. 9, "seat A" is selected from the plurality of recommended regions R81. Therefore, in Fig. 9, the recommendation reason R82 regarding "seat A" and position information in the target space 80 are illustrated. To select a recommended region R81, for example, the recommended region R81 to be selected is touched on the screen of the signage 93. As the recommendation reason R82, for a plurality of region information items 2a regarding "seat A", the values thereof and comfort levels 83 are illustrated. The comfort levels 83 will be described later.

(3) Recommended Region Determining Process

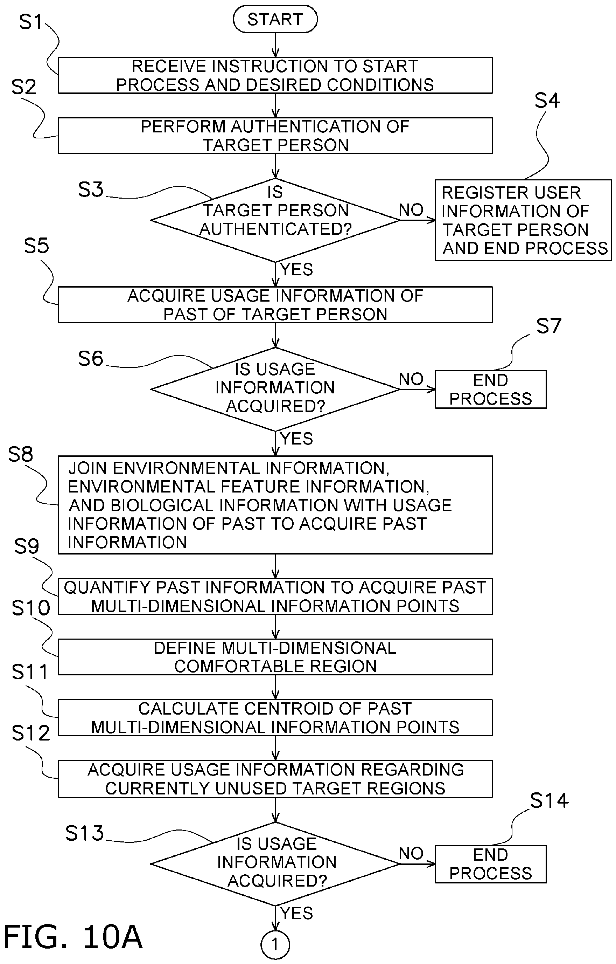

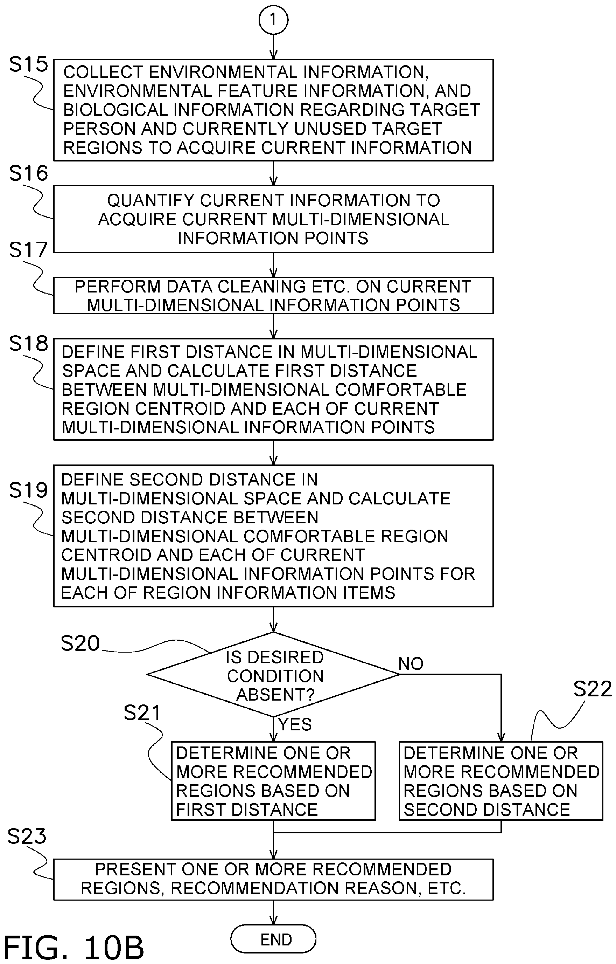

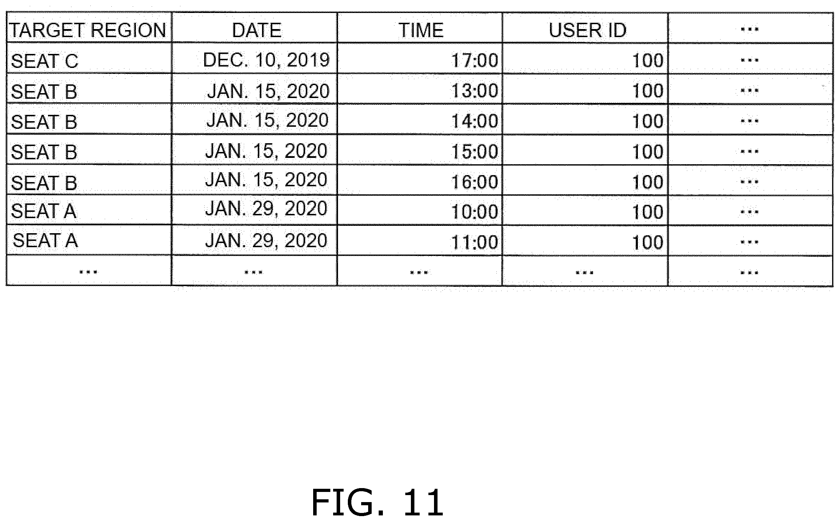

The recommended region determining process will be described with reference to the flowchart in Fig. 10A and Fig. 10B.
In order to receive region recommendation, a target person transmits an instruction to start the recommended region determining process and the desired condition 91 from the input device 90a to the region recommendation device 100.
As illustrated in step S1, the region recommendation device 100 receives the instruction to start the recommended region determining process and the desired condition 91 by the function of the desired condition acquiring unit 90. As illustrated in step S2, the region recommendation device 100 performs authentication of the target person using the authenticating unit 16. As illustrated in step S3, if the target person is authenticated, the region recommendation device 100 acquires "user ID" output from the authenticating unit 16, and proceeds to step S5. Here, it is assumed that the acquired "user ID" of the target person is "100". As illustrated in step S3, if the target person is not authenticated, since the past information 74 does not exist for unauthenticated target persons, the region recommendation device 100 is unable to perform the recommended region determining process. Therefore, as illustrated in step S4, the region recommendation device 100 registers the user information 15 of the target person using the user information acquiring unit 14, and ends the recommended region determining process. When ending the recommended region determining process, the region recommendation device 100 may, for example, present "unable to recommend a region because of the absence of past usage history" on the output device 92a using the function of the presenting unit 92.
Upon acquiring "user ID" of the target person, as illustrated in step S5, the region recommendation device 100 acquires the current date and time from the internal timer of the control arithmetic device, and acquires the usage information 11 regarding the target person before the current date and time. Specifically, if the current date and time is 13:00 on Jan. 30, 2020, the region recommendation device 100 extracts records in which "date" and "time" are earlier than "13:00" on "Jan. 30, 2020" and "user ID" is "100" from the usage information 11. As illustrated in step S6, if the usage information 11 of the past regarding the target person is acquired, the process proceeds to step S8. Fig. 11 illustrates an example of the usage information 11 of the past. In Fig. 11, the target person uses "seat C" at "17:00" on "Dec. 10, 2019". Furthermore, the target person uses "seat B" from "13:00" to "15:00" on "Jan. 15, 2020". Furthermore, the target person uses "seat A" from "10:00" to "11:00" on "Jan. 29, 2020". Normally, once the target person is authenticated, the target person is assumed to have used the target space 80 in the past, and thus, it is possible to acquire the usage information 11 of the past regarding the target person. However, if it is not possible to acquire the usage information 11 of the past regarding the target person as illustrated in step S6, the region recommendation device 100, for example, presents "unable to recommend a region because of the absence of past usage history" on the output device 92a using the function of the presenting unit 92, and ends the recommended region determining process as illustrated in step S7.

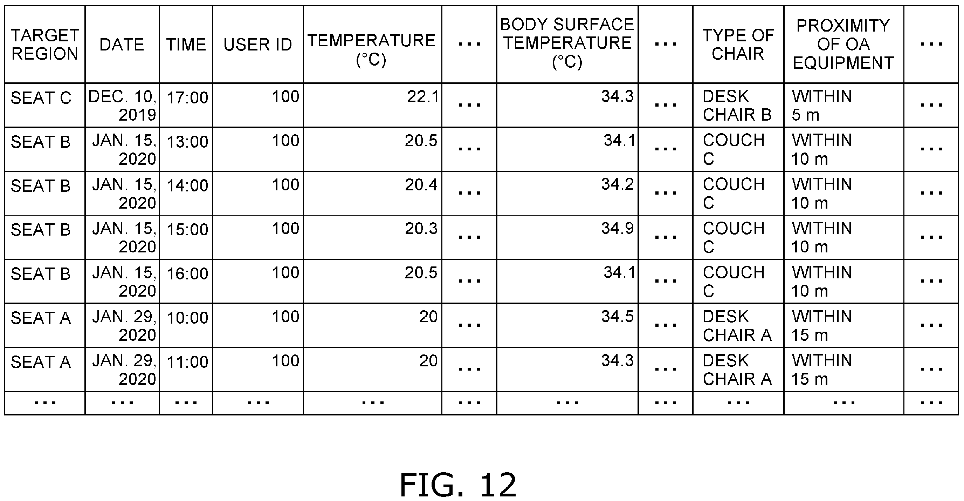

Upon acquiring the usage information 11 of the past, as illustrated in step S8, the region recommendation device 100 joins the environmental information 21, the region feature information 31, and the biological information 61 with the usage information 11 of the past to acquire past information 74. Specifically, the environmental information 21 and the region feature information 31 are joined using "target region", "date", and "time" of the usage information 11 of the past as keys. This join is left outer join in which the usage information 11 of the past is set to the left. Furthermore, the region recommendation device 100 joins the biological information 61 with "user ID", "date", and "time" of the usage information 11 of the past as keys. This join is left outer join in which the usage information 11 of the past is set to the left. In this way, the region recommendation device 100 acquires the past information 74 in which the usage information 11, the environmental information 21, the region feature information 31, and the biological information 61 of the past regarding the target person are unified. Fig. 12 illustrates an example of the past information 74. Fig. 12 illustrates "temperature" as a representative of the environmental information 21, "body surface temperature" as a representative of the biological information 61, and "type of chair" and "proximity of OA equipment" as a representative of the region feature information 31.

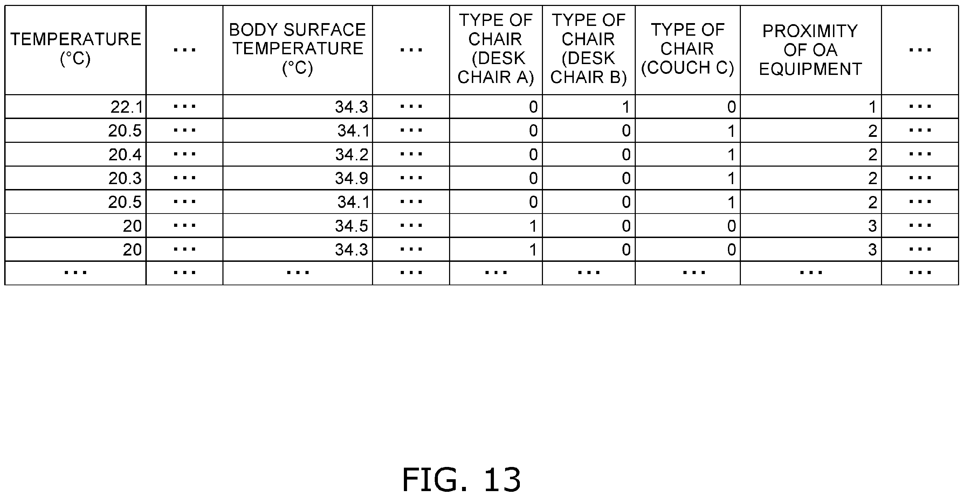

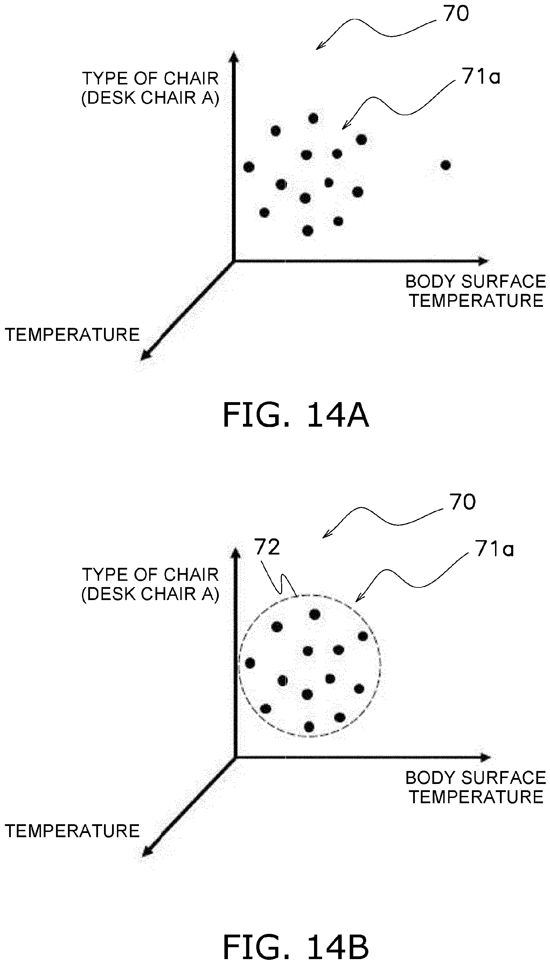

Upon acquiring the past information 74, as illustrated in step S9, the region recommendation device 100 quantifies the past information 74 to acquire the past multi-dimensional information points 71a. Numerical data such as "temperature" and "humidity" has already been quantified. Nominal scale data such as "type of chair" and "type of table" is quantified by, for example, one-hot encoding. A numerical value is assigned to ordinal scale data such as "proximity of OA equipment" according to the order, for example. Fig. 13 illustrates an example of the past multi-dimensional information points 71a. In Fig. 13, in particular, the nominal scale "type of chair" and the ordinal scale "proximity of OA equipment" are quantified. In addition, in terms of points in the multi-dimensional space 70, "target region", "date", "time", and "user ID" are excluded from the past multi-dimensional information points 71a in Fig. 13. Fig. 14A illustrates the past multi-dimensional information points 71a in the multi-dimensional space 70. In Fig. 14A, only three dimensions are drawn for visualization.

Upon acquiring the past multi-dimensional information points 71a, as illustrated in step S10, the region recommendation device 100 performs data cleaning such as outlier exclusion on the past multi-dimensional information points 71a to define the multi-dimensional comfortable region 72. As the data cleaning, for example, outlier exclusion, missing value exclusion, or the like is performed. In the outlier exclusion, for example, a mean and a standard deviation are calculated for each of the region information items 2a constituting the past multi-dimensional information points 71a, and past multi-dimensional information points 71a having an item value separated from the mean by three times or more of the standard deviation are excluded. In the missing value exclusion, for example, past multi-dimensional information points 71a having a missing value in the region information items 2a constituting the past multi-dimensional information points 71a are excluded. A region including the past multi-dimensional information points 71a after the data cleaning is defined as the multi-dimensional comfortable region 72. Fig. 14B illustrates the past multi-dimensional information points 71a after the data cleaning and the multi-dimensional comfortable region 72. By the outlier exclusion, one point of the past multi-dimensional information points 71a, which is drawn away to the right in Fig. 14A, is excluded.

Note that the region recommendation device 100 may perform scaling in addition to the data cleaning. Scaling is a process of aligning the scale of each item. In the present embodiment, distances are used to determine the recommended regions R81. Therefore, it may be important to align the scale so that the each item contributes equally to the distances. As the scaling, for example, normalization, standardization, or the like is performed. In the normalization, the numerical value of each item is converted to 0 or more and 1 or less. In the standardization, the distribution of each item is converted into a distribution with a mean of 0 and a standard deviation of 1.

Upon defining the multi-dimensional comfortable region 72, as illustrated in step S11, the region recommendation device 100 calculates the multi-dimensional comfortable region centroid 73, which is the centroid of past multi-dimensional information points 71a included in the multi-dimensional comfortable region 72. The multi-dimensional comfortable region centroid 73 is calculated using, for example, the following equation.

## Math. 1

$$r^{(G)} = \frac{\sum_i m_i r^{(i)}}{\sum_i m_i}$$

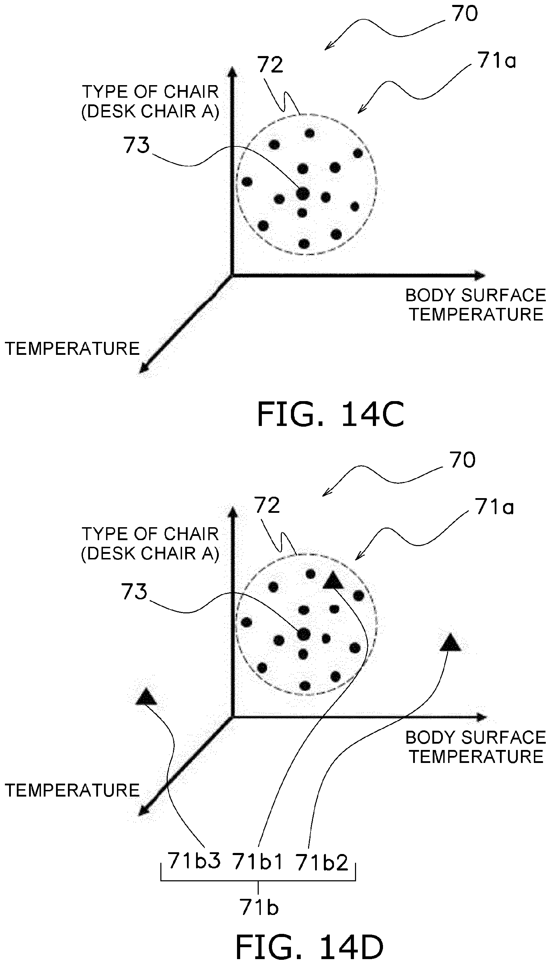

Here, $r^{(i)}$ is a position vector of an i-th past multi-dimensional information point 71a. $r^{(G)}$ is a position vector of the multi-dimensional comfortable region centroid 73. $m_i$ is the weight of the i-th past multi-dimensional information point 71a. In a case of weighting by the past multi-dimensional information point 71a, $m_i$ is adjusted. For example, it is used when past multi-dimensional information points 71a in the morning are desired to be emphasized. In the present embodiment, the multi-dimensional comfortable region centroid 73 in which every $m_i$ is set to 1 is used. In other words, the multi-dimensional comfortable region centroid 73 of the present embodiment coincides with the mean vector of past multi-dimensional information points 71a included in the multi-dimensional comfortable region 72. Fig. 14C illustrates the multi-dimensional comfortable region centroid 73.

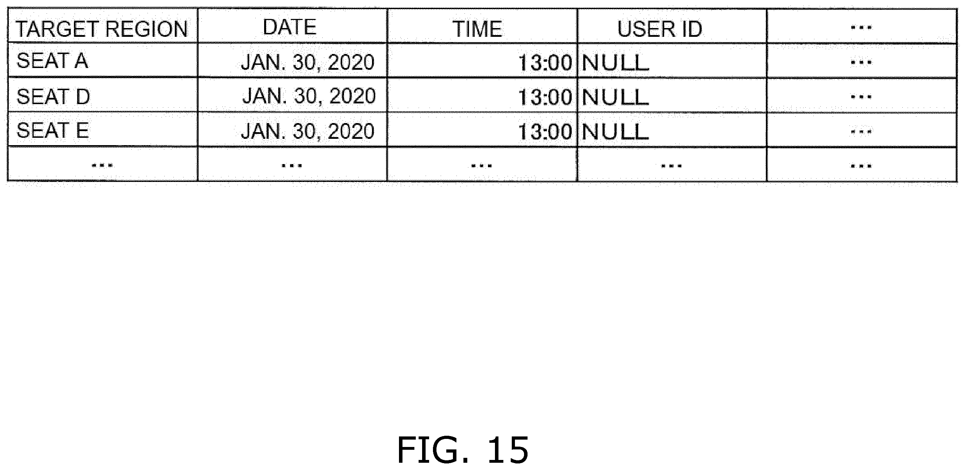

Upon calculating the multi-dimensional comfortable region centroid 73, as illustrated in step S12, the region recommendation device 100 acquires the usage information 11 regarding currently unused target regions 81, using the usage information acquiring unit 10. As illustrated in step S13, if the usage information 11 regarding the currently unused target regions 81 is acquired, the process proceeds to step S15. Fig. 15 illustrates an example of the usage information 11 regarding the currently unused target regions 81. In Fig. 15, "seat A", "seat D", and "seat E" are unused. As illustrated in step S13, if it is not possible to acquire the usage information 11 regarding the currently unused target regions 81, the region recommendation device 100, for example, presents "there are no currently available regions" on the output device 92a, using the function of the presenting unit 92, and ends the recommended region determining process as illustrated in step S14.

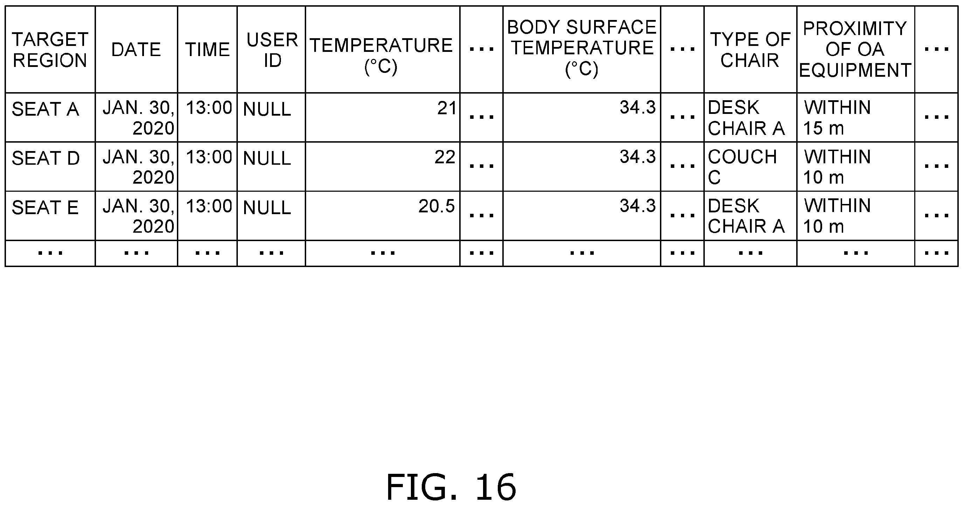

Upon acquiring the usage information 11 regarding the currently unused target regions 81, as illustrated in step S15, the region recommendation device 100 acquires the environmental information 21, the region feature information 31, and the biological information 61 regarding the target person and the currently unused target regions 81, using the environmental information acquiring unit 20, the feature information acquiring unit 30, and the biological information acquiring unit 60. The region recommendation device 100 unifies these pieces of information to acquire the current information 75 in the same manner as when acquiring the past information 74. As the biological information 61, current values regarding the target person are used. Fig. 16 illustrates an example of the current information 75.

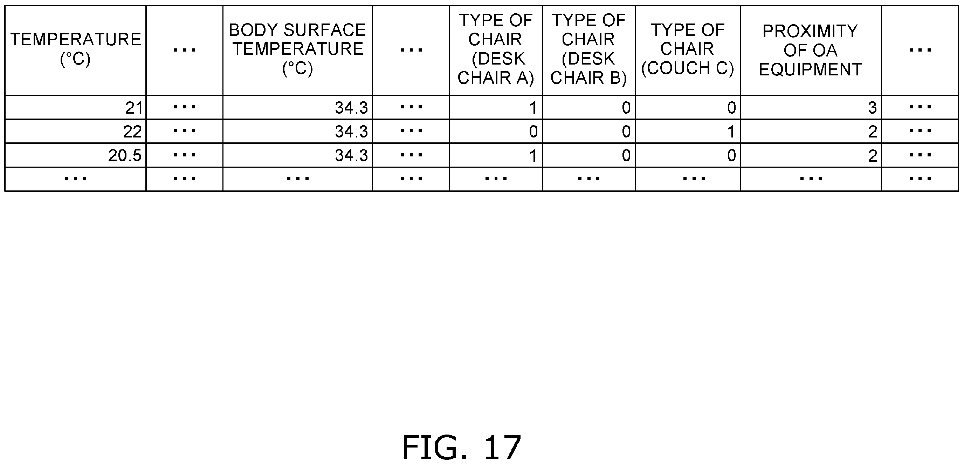

Upon acquiring the current information 75, as illustrated in step S16, the region recommendation device 100 quantifies the current information 75 to acquire the current multi-dimensional information points 71b. The quantification method is the same as that when the past multi-dimensional information points 71a are acquired. Fig. 17 illustrates an example of the current multi-dimensional information points 71b. Furthermore, Fig. 14D illustrates the current multi-dimensional information points 71b in the multi-dimensional space 70. In Fig. 14D, three current multi-dimensional information points 71b1, 71b2, and 71b3 are depicted.

Upon acquiring the current multi-dimensional information points 71b, as illustrated in step S17, the region recommendation device 100 performs data cleaning on the current multi-dimensional information points 71b. The data cleaning method is the same as that for the past multi-dimensional information points 71a. If scaling is performed on the past multi-dimensional information points 71a, the region recommendation device 100 performs the same process on the current multi-dimensional information points 71b.

After the data cleaning on the current multi-dimensional information points 71b, as illustrated in step S18, the region recommendation device 100 defines the first distance D1 as the first degree of similarity SM1 indicating the degree of similarity in the multi-dimensional space 70, and calculates the first distance D1 between the multi-dimensional comfortable region centroid 73 and each of the current multi-dimensional information points 71b.

For example, the following Minkowski distance is used as the first distance D1.

## Math. 2

$$D1\left(r^{(G)}, r^{(i)}\right) = \sqrt[p]{\sum_k \left| r_k^{(G)} - r_k^{(i)} \right|^p}$$

Here, $r^{(i)}$ is the position vector of an i-th current multi-dimensional information point 71b. $r_k^{(i)}$ is the value of a k-th region information item 2a constituting the i-th current multi-dimensional information point 71b. The Minkowski

distance becomes the Manhattan distance when p = 1, and becomes the Euclidean distance when p = 2.

**[0107]** For example, the following Mahalanobis distance is used as the first distance D1.

Math. 3

$$D1\left(\boldsymbol{r}^{(G)} = \boldsymbol{\mu},\ \boldsymbol{r}^{(i)}\right) = \sqrt{(\ \boldsymbol{r}^{(i)} - \boldsymbol{\mu})^T \boldsymbol{\Sigma}^{-1} (\ \boldsymbol{r}^{(i)} - \boldsymbol{\mu})}$$

**[0108]** Here, $\mu$ and $\Sigma$ are a mean vector and a variance-covariance matrix of the past multi-dimensional information points 71a included in the multi-dimensional comfortable region 72. In the present embodiment, $\mu$ coincides with the multi-dimensional comfortable region centroid 73. Since the Mahalanobis distance is a distance in consideration of variance, scaling of the past multi-dimensional information points 71a and the current multi-dimensional information points 71b may be skipped when the Mahalanobis distance is used.

**[0109]** Upon calculating the first distance D1, as illustrated in step S19, the region recommendation device 100 defines the second distance D2 as the second degree of similarity SM2 indicating the degree of similarity in the multi-dimensional space 70, and calculates the second distance D2 between the multi-dimensional comfortable region centroid 73 and each of the current multi-dimensional information points 71b for each of the region information items 2a.

**[0110]** For example, the following distance is used as the second distance D2 between the multi-dimensional comfortable region centroid 73 and the i-th current multi-dimensional information point 71b for the k-th region information item 2a.

Math. 4

$$D2\left(\boldsymbol{r}_k^{(G)}, \boldsymbol{r}_k^{(i)}\right) = \left|\boldsymbol{r}_k^{(G)} - \boldsymbol{r}_k^{(i)}\right|$$

**[0111]** Upon calculating the second distance D2, as illustrated in step S20, the region recommendation device 100 determines whether or not the desired condition 91 is present.

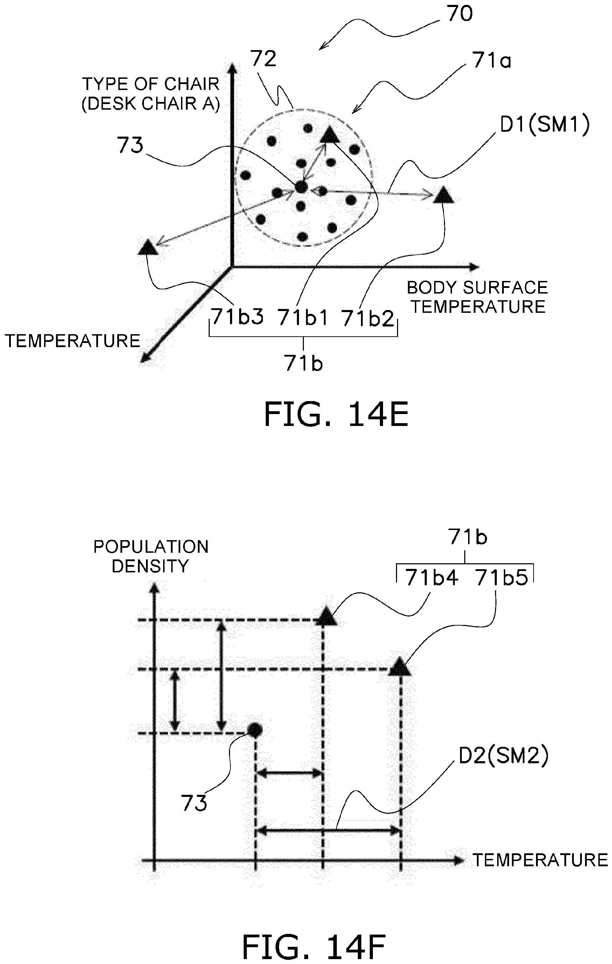

**[0112]** If there is no desired condition 91, as illustrated in step S21, the region recommendation device 100 determines one or more recommended regions R81 on the basis of the first distance D1. The region recommendation device 100 determines, as the one or more recommended regions R81, one or more target regions 81 associated with one or more current multi-dimensional information points 71b for which the first distance D1 from the multi-dimensional comfortable region centroid 73 is close. In Fig. 14E, first distances D1 from the multi-dimensional comfortable region centroid 73 to the three current multi-dimensional information points 71b1, 71b2, and 71b3 are indicated by three double-headed arrows. Since the first distance D1 from the multi-dimensional comfortable region centroid 73 to the current multi-dimensional information point 71b1 is the shortest, a target region 81 associated with the current multi-dimensional information point 71b1 is determined as a recommended region R81 with the highest priority.

**[0113]** If the desired condition 91 is present, the region recommendation device 100 determines the one or more recommended regions R81 on the basis of the second distance D2, as illustrated in step S22. The region recommendation device 100 determines, as one or more recommended regions R81, one or more target regions 81 associated with one or more current multi-dimensional information points 71b for which the second distance D2 from the multi-dimensional comfortable region centroid 73 is close. In Fig. 14F, second distances D2 from the multi-dimensional comfortable region centroid 73 to two current multi-dimensional information points 71b4 and 71b5 are indicated by four double-headed arrows. In Fig. 14F, only two dimensions are drawn for visualization. For example, if the priority region information item 2b of the desired condition 91 is the temperature, since the current multi-dimensional information point 71b4 has the shorter second distance D2 to the multi-dimensional comfortable region centroid 73, a target region 81 associated with the current multi-dimensional information point 71b4 is determined as a recommended region R81 with the highest priority.

**[0114]** Upon determining the one or more recommended regions R81, as illustrated in step S23, the region recommendation device 100 presents the layout diagram of the target space 80, the one or more recommended regions R81, and the recommendation reason R82 for determining the one or more recommended regions R81 on the output device 92a using the function of the presenting unit 92. The region recommendation device 100 may present the comfort level 83 for each of the region information items 2a while presenting the recommendation reason R82. The comfort level 83 is defined to have a larger value as the second distance D2 is shorter. The comfort level 83 is presented as illustrated in Fig. 9, for example.

**[0115]** The comfort level 83 of the k-th region information item 2a at the i-th current multi-dimensional information point 71b is calculated, for example, as follows.

Math. 5

$$Comfort\ Level(\%) = \frac{100}{1 + \alpha \times \dfrac{D2(r_k^{(G)}, r_k^{(i)})}{\sigma_k}}$$

In the expression, $\sigma_k$ is the standard deviation calculated from the values of the k-th region information item 2a of all current multi-dimensional information points 71b4. By dividing the second distance D2 by $\sigma_k$, it is possible to align the scales of the respective region information items 2a for comparison. $\alpha$ is a hyperparameter. According to this definition, the comfort level 83 becomes a maximum value of 100% when the second distance D2 coincides with the multi-dimensional comfortable region centroid 73.

(4) Features

(4-1)
Conventional seat recommendation devices do not present the recommendation reason R82 when recommending seats. Therefore, it is difficult for a target person to select a preferred seat from a plurality of recommended seats because there is no determination material. The region recommendation device 100 according to the present embodiment causes the presenting unit 92 to present, in addition to the one or more recommended regions R81, and the recommendation reason R82 for determining the one or more recommended regions R81 to the target person. Therefore, the target person can select a preferred region from the plurality of recommended regions R81 in consideration of the recommendation reason R82.

(4-2)
The region recommendation device 100 according to the present embodiment calculates the second degree of similarity SM2 indicating the degree of similarity, for each of the region information items 2a, between the past region information 74a and the current region information 75a. The second degree of similarity SM2 in the present embodiment is the second distance D2. The region recommendation device 100 calculates, for example, the comfort level 83 for each of the region information items 2a from the second distance D2. Therefore, the region recommendation device 100 can use the comfort level 83 for each of the region information items 2a as the recommendation reason R82. As a result, the target person has more determination material, and can easily select a preferred region from the plurality of recommended regions R81.

(4-3)
If the target person has the desired condition 91, the region recommendation device 100 according to the present embodiment determines a recommended region R81 using the second degree of similarity SM2 regarding the priority region information item 2b. Therefore, the region recommendation device 100 may determine the recommended region R81 in consideration of only the priority region information item 2b. As a result, the target person can receive region recommendation in consideration of only the preferred region information item 2a.

(5) Modifications

(5-1) Modification 1A

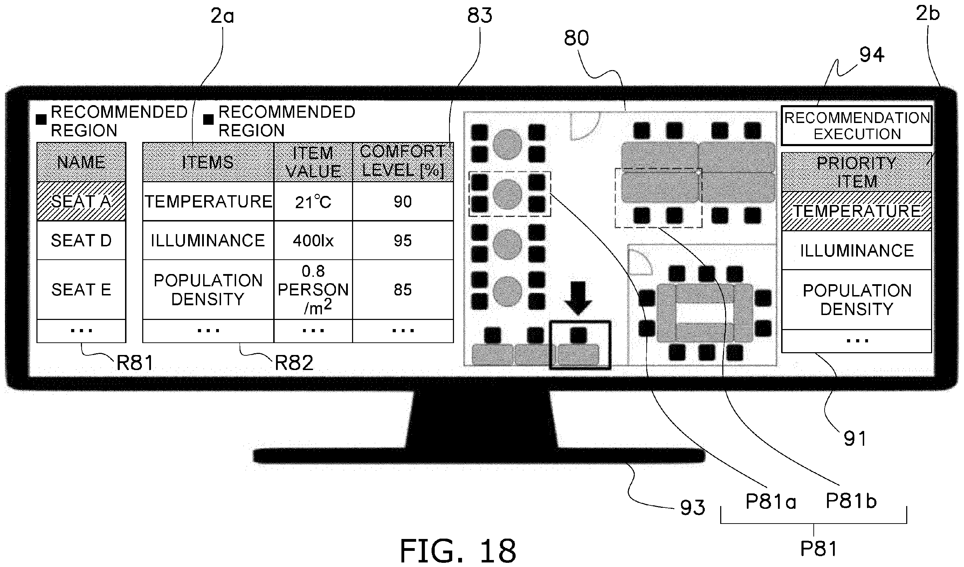

In the present embodiment, as illustrated in Fig. 9, the region recommendation device 100 presents only the positions of the recommended regions R81 in the layout diagram of the target space 80. However, the presenting unit 92 of the region recommendation device 100 may further present the usage history of the target person on the basis of the region information 2 regarding the target person. Specifically, the region recommendation device 100 may output the positions of target regions 81 stored in the usage information 11 of the past regarding the target person illustrated in Fig. 11 to the output device 92a. For example, as illustrated in Fig. 18, the region recommendation device 100 presents the past usage regions P81a and P81b on the screen of the signage 93 by rectangular dotted lines. As a result, the target person can select a recommended region R81 with reference to past usage regions P81.

(5-2) Modification 1B

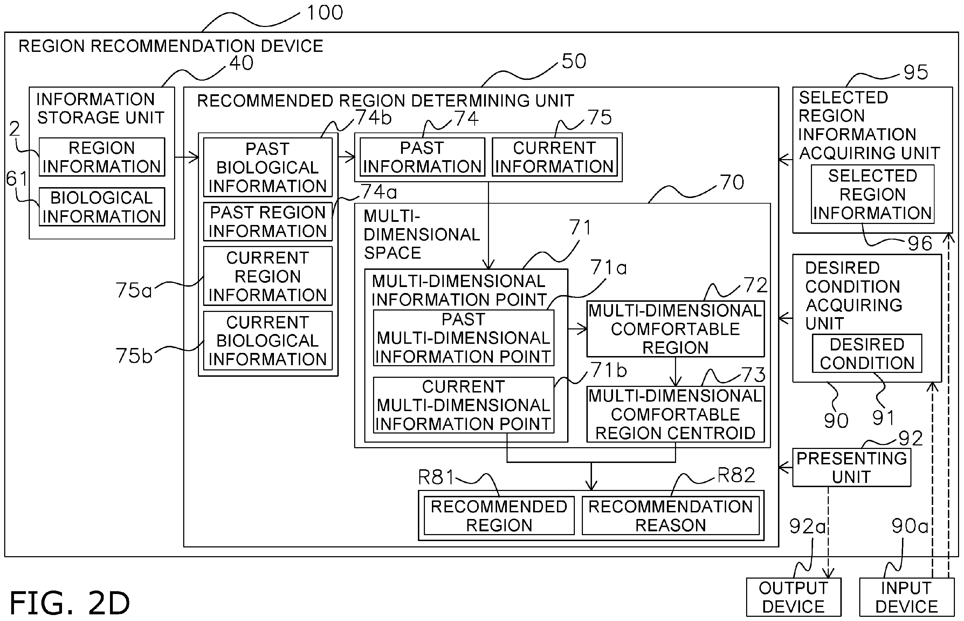

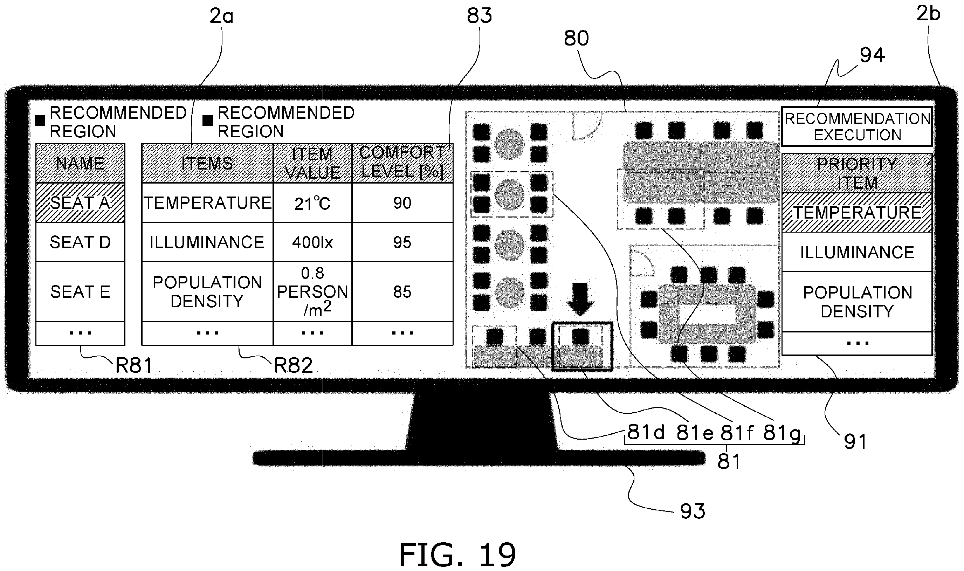

As illustrated in Fig. 2D, the region recommendation device 100 may further include a selected region information acquiring unit 95 that acquires selected region information 96 that is position information of a region selected by a target person. At this time, the presenting unit 92 further presents the region information 2 regarding the selected region information 96. Specifically, after the recommended region determining process, the region recommendation device 100 presents the positions of all currently unused target regions 81 in the layout diagram of the target space 80. For example, in Fig. 19, currently unused target regions 81d, 81e, 81f, and 81g are indicated by rectangular dotted lines on the screen of the signage 93. Since the recommended regions R81 are also currently unused target regions 81, in Fig. 19, the position of the seat A that is a recommended region R81 (the position indicated by the arrow) overlaps the currently unused target region 81e. Normally, the target person selects a preferred region from the recommended regions R81 presented on the output device 92a. However, some target persons may want to refer to the region information 2 of currently unused target regions 81 other than the recommended regions R81. In this case, for example, the target person touches the currently unused target region 81 to be referred to on the screen of the signage 93. The selected region information acquiring unit 95 acquires selected region information 96 that is position information of a target region 81 touched by the target person. The selected region information 96 is information regarding "range" in the region basic information 13 illustrated in Fig. 3. The region recommendation device 100 refers to the region basic information 13 and calculates the corresponding target region 81 from the selected region information 96. If the target region 81 is calculated, the region recommendation device 100 presents the region information 2 regarding the target region 81 using the presenting unit 92.

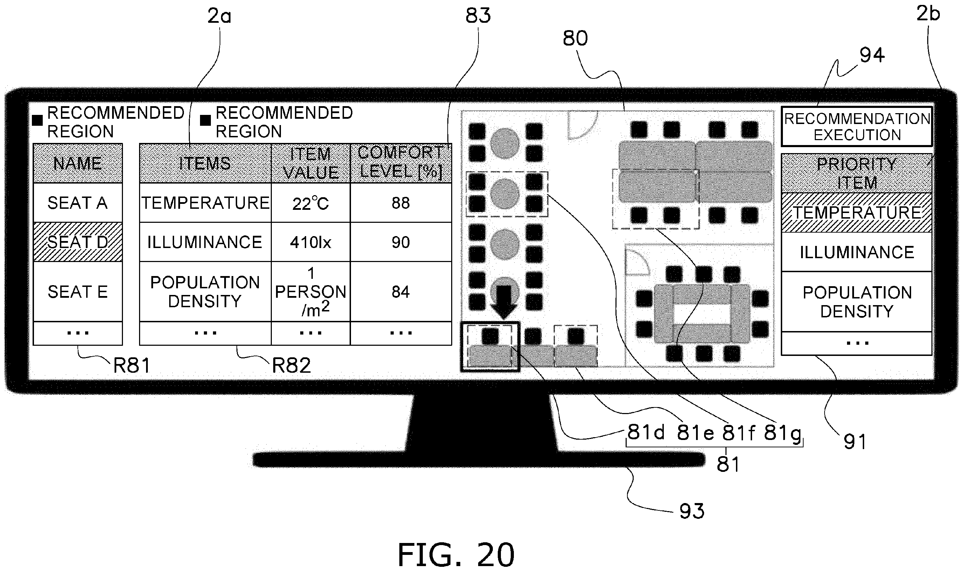

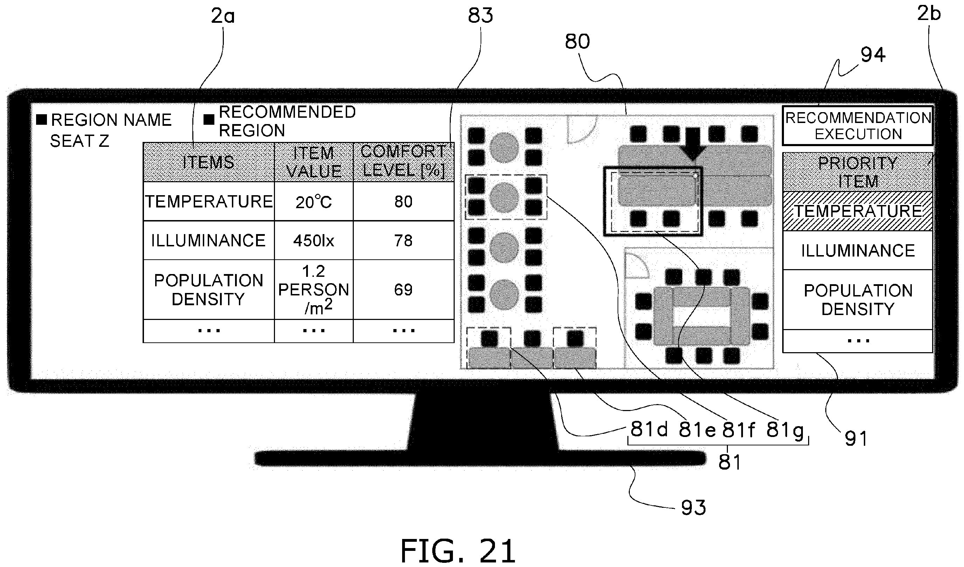

If the target region 81 touched by the target person is a seat D (81d in Fig. 19) that is one of the recommended regions R81, the region recommendation device 100 presents a screen similar to the screen after touching the seat D in the recommended region R81 table in Fig. 19 on the output device 92a, for example, as illustrated in Fig. 20. If the target region 81 touched by the target person is a seat Z (81g in Fig. 19) that is not the recommended region R81, the region recommendation device 100 presents, for example, the region information 2 regarding the seat Z on the output device 92a as illustrated in Fig. 21.

(5-3)

Although the embodiment of the present disclosure has been described above, it should be understood that various changes can be made on the forms and details without departing from the spirit and scope of the present disclosure described in the claims.

**REFERENCE SIGNS LIST**

| | |
|---|---|
| 1 | region information acquiring unit |
| 2 | region information |
| 2a | region information item |
| 2b | priority region information item |
| 50 | recommended region determining unit |
| 60 | biological information acquiring unit |
| 61 | biological information |
| 74 | past information |
| 74a | past region information |
| 74b | past biological information |
| 75 | current information |
| 75a | current region information |
| 75b | current biological information |
| 80 | target space |
| 81 | target region |
| R81 | recommended region |
| R82 | recommendation reason |
| 90 | desired condition acquiring unit |
| 91 | desired condition |
| 92 | presenting unit |
| 95 | selected region information acquiring unit |
| 96 | selected region information |
| 100 | region recommendation device |
| SM1 | first degree of similarity |
| SM2 | second degree of similarity |

**CITATION LIST**

**PATENT LITERATURE**

PTL 1: Japanese Unexamined Patent Application Publication No. 2014-214975

**Claims**

1. A region recommendation device (100) for determining one or more recommended regions (R81) to be recommended to a target person from among a plurality of target regions (81) in a target space (80), the region recommendation device comprising:

   a region information acquiring unit (1) that acquires region information (2) that is information regarding the target regions;
   a recommended region determining unit (50) that determines the one or more recommended regions on the basis of the region information; and
   a presenting unit (92) that presents, to the target person, the one or more recommended regions and a recommendation reason (R82) for determining the one or more recommended regions.

2. The region recommendation device according to claim 1, wherein the recommended region determining unit calculates a first degree of similarity (SM1) indicating a degree of similarity between past information (74) including past region information (74a) that is the region information of a past and current information (75) including current region information (75a) that is the region information of present, regarding the target person and the target regions, and determines the one or more recommended regions.

3. The region recommendation device according to claim 2, further comprising a biological information acquiring unit (60) that acquires biological information (61) of a person in the target space, wherein

   the past information further includes past biological information (74b) that is the biological information of the past regarding the target person, and
   the current information further includes current biological information (75b) that is the biological information of the present regarding the target person.

4. The region recommendation device according to claim 2 or 3, wherein

   the region information includes region information items,
   the region information items include at least one of a temperature, a humidity, an illuminance, a color of illumination, a noise, a type of chair, a type of table, personal use or shared use, whether a window is near, a population density, presence or absence of an outlet, and proximity of OA equipment, and
   the recommended region determining unit further calculates a second degree of similarity (SM2) indicating a degree of similarity, for each of the region information items, between the past region information and the current region information.

5. The region recommendation device according to claim 4, further comprising a desired condition acquiring unit (90) that acquires a desired condition (91) of the target person, wherein

   the desired condition includes a priority region information item (2b) that is the region information item to which the target person has priority, and
   the recommended region determining unit calculates the second degree of similarity regarding the priority region information item and determines the one or more recommended regions.

6. The region recommendation device according to any one of claims 1 to 5, wherein

   the region information includes region information items,
   the region information items include at least one of a temperature, a humidity, an illuminance, a color of illumination, a noise, a type of chair, a type of table, personal use or shared use, whether a window is near, a population density, presence or absence of an outlet, and proximity of OA equipment, and
the recommendation reason presented by the presenting unit includes at least one or more of the region information items regarding the one or more recommended regions.

7. The region recommendation device according to any one of claims 1 to 6, wherein the presenting unit further presents a use history of the target person on the basis of the region information regarding the target person.

8. The region recommendation device according to any one of claims 1 to 7, further comprising a selected region information acquiring unit (95) that acquires selected region information (96) that is position information of a region selected by the target person, wherein
the presenting unit further presents the region information regarding the selected region information.

FIG. 1

FIG. 2A

EP 4 131 093 A1

**REGION RECOMMENDATION DEVICE** — 100

**REGION INFORMATION ACQUIRING UNIT** — 10 — 1

**USAGE INFORMATION ACQUIRING UNIT**

- BASIC INFORMATION ACQUIRING UNIT — 12
  - REGION BASIC INFORMATION — 13
- USER INFORMATION ACQUIRING UNIT — 14
  - USER INFORMATION — 15
- AUTHENTICATING UNIT — 16
- USAGE INFORMATION — 11

**REGION INFORMATION** — 2
- USAGE INFORMATION — 11
- ENVIRONMENTAL INFORMATION — 21
- REGION FEATURE INFORMATION — 31

**ENVIRONMENTAL INFORMATION ACQUIRING UNIT**
- ENVIRONMENTAL INFORMATION — 21 — 20

**FEATURE INFORMATION ACQUIRING UNIT**
- REGION FEATURE INFORMATION — 31 — 30

**BIOLOGICAL INFORMATION ACQUIRING UNIT** — 60
- BIOLOGICAL INFORMATION — 61

DETECTOR — D

FIG. 2B

FIG. 2C

EP 4 131 093 A1

FIG. 2D

REGION RECOMMENDATION DEVICE — 100

INFORMATION STORAGE UNIT — 40
- REGION INFORMATION — 2
- BIOLOGICAL INFORMATION — 61

RECOMMENDED REGION DETERMINING UNIT — 50
- PAST BIOLOGICAL INFORMATION — 74b
- PAST REGION INFORMATION — 74a
- CURRENT REGION INFORMATION — 75a
- CURRENT BIOLOGICAL INFORMATION — 75b
- PAST INFORMATION — 74
- CURRENT INFORMATION — 75

MULTI-DIMENSIONAL SPACE — 70
- MULTI-DIMENSIONAL INFORMATION POINT — 71
  - PAST MULTI-DIMENSIONAL INFORMATION POINT — 71a
  - CURRENT MULTI-DIMENSIONAL INFORMATION POINT — 71b
- MULTI-DIMENSIONAL COMFORTABLE REGION — 72
- MULTI-DIMENSIONAL COMFORTABLE REGION CENTROID — 73
- RECOMMENDED REGION — R81
- RECOMMENDATION REASON — R82

SELECTED REGION INFORMATION ACQUIRING UNIT — 95
- SELECTED REGION INFORMATION — 96

DESIRED CONDITION ACQUIRING UNIT
- DESIRED CONDITION — 90 / 91

PRESENTING UNIT — 92

OUTPUT DEVICE — 92a

INPUT DEVICE — 90a

EP 4 131 093 A1

| TARGET REGION | RANGE | COLOR OF ILLUMINATION | TYPE OF CHAIR | TYPE OF TABLE | PERSONAL USE OR SHARED USE | WHETHER WINDOW IS NEAR | PRESENCE OR ABSENCE OF OUTLET | PROXIMITY OF OA EQUIPMENT | ... |
|---|---|---|---|---|---|---|---|---|---|
| SEAT A | RANGE A | INCANDESCENT | DESK CHAIR A | DESK TABLE B | PERSONAL USE | YES | PRESENT | WITHIN 15 m | ... |
| SEAT B | RANGE B | NATURAL WHITE | COUCH C | DINING TABLE A | SHARED USE | NO | ABSENT | WITHIN 10 m | ... |
| SEAT C | RANGE C | DAYLIGHT | DESK CHAIR B | DESK TABLE C | SHARED USE | NO | PRESENT | WITHIN 5 m | ... |
| ... | ... | ... | ... | ... | ... | ... | ... | ... | ... |

# FIG. 3

EP 4 131 093 A1

| USER ID | NAME | FACE IMAGE | ... |
|---|---|---|---|
| 100 | AA | /pic/aaa.jpeg | ... |
| 200 | BB | /pic/bbb.jpeg | ... |
| 300 | CC | /pic/ccc.jpeg | ... |
| 400 | DD | /pic/ddd.jpeg | ... |
| ... | ... | ... | ... |

FIG. 4

| TARGET REGION | DATE | TIME | USER ID | ... |
|---|---|---|---|---|
| SEAT A | JAN. 29, 2020 | 10:00 | 100 | ... |
| SEAT A | JAN. 29, 2020 | 11:00 | 100 | ... |
| SEAT B | JAN. 29, 2020 | 10:00 | 200 | ... |
| SEAT B | JAN. 29, 2020 | 11:00 | NULL | ... |
| SEAT C | JAN. 29, 2020 | 10:00 | 300 | ... |
| SEAT C | JAN. 29, 2020 | 11:00 | 400 | ... |
| ... | ... | ... | ... | ... |

FIG. 5

EP 4 131 093 A1

| TARGET REGION | DATE | TIME | TEMPERATURE (°C) | HUMIDITY (%) | ILLUMINANCE (lx) | COLOR OF ILLUMINATION | NOISE (dB) | ... |
|---|---|---|---|---|---|---|---|---|
| SEAT A | JAN. 29, 2020 | 10:00 | 20 | 50 | 500 | INCANDESCENT | 40 | ... |
| SEAT A | JAN. 29, 2020 | 11:00 | 20 | 51 | 510 | INCANDESCENT | 39 | ... |
| SEAT B | JAN. 29, 2020 | 10:00 | 21 | 49 | 750 | NATURAL WHITE | 30 | ... |
| SEAT B | JAN. 29, 2020 | 11:00 | 20.5 | 49 | 748 | NATURAL WHITE | 28 | ... |
| SEAT C | JAN. 29, 2020 | 10:00 | 22 | 52 | 300 | DAYLIGHT | 20 | ... |
| SEAT C | JAN. 29, 2020 | 11:00 | 22 | 52 | 310 | DAYLIGHT | 21 | ... |
| ... | ... | ... | ... | ... | ... | ... | ... | ... |

FIG. 6

| TARGET REGION | DATE | TIME | TYPE OF CHAIR | TYPE OF TABLE | PERSONAL USE OR SHARED USE | WHETHER WINDOW IS NEAR | POPULATION DENSITY (NUMBER OF PEOPLE) | PRESENCE OR ABSENCE OF OUTLET | PROXIMITY OF OA EQUIPMENT | ... |
|---|---|---|---|---|---|---|---|---|---|---|
| SEAT A | JAN. 29, 2020 | 10:00 | DESK CHAIR A | DESK TABLE B | PERSONAL USE | YES | 2 | PRESENT | WITHIN 15 m | ... |
| SEAT A | JAN. 29, 2020 | 11:00 | DESK CHAIR A | DESK TABLE B | PERSONAL USE | YES | 3 | PRESENT | WITHIN 15 m | ... |
| SEAT B | JAN. 29, 2020 | 10:00 | COUCH C | DINING TABLE A | SHARED USE | NO | 4 | ABSENT | WITHIN 10 m | ... |
| SEAT B | JAN. 29, 2020 | 11:00 | COUCH C | DINING TABLE A | SHARED USE | NO | 4 | ABSENT | WITHIN 10 m | ... |
| SEAT C | JAN. 29, 2020 | 10:00 | DESK CHAIR B | DESK TABLE C | SHARED USE | NO | 3 | PRESENT | WITHIN 5 m | ... |
| SEAT C | JAN. 29, 2020 | 11:00 | DESK CHAIR B | DESK TABLE C | SHARED USE | NO | 4 | PRESENT | WITHIN 5 m | ... |
| ... | ... | ... | ... | ... | ... | ... | ... | ... | ... | ... |

FIG. 7

| USER ID | DATE | TIME | BODY SURFACE TEMPERATURE (°C) | CORE BODY TEMPERATURE (°C) | PULSE (TIMES/MINUTE) | ... |
|---|---|---|---|---|---|---|
| 100 | JAN. 29, 2020 | 10:00 | 34.5 | 36.5 | 70 | ... |
| 100 | JAN. 29, 2020 | 11:00 | 34.3 | 36.4 | 75 | ... |
| 200 | JAN. 29, 2020 | 10:00 | 35 | 37 | 80 | ... |
| 300 | JAN. 29, 2020 | 10:00 | 34 | 36.8 | 90 | ... |
| 400 | JAN. 29, 2020 | 11:00 | 33 | 36.3 | 65 | ... |
| ... | ... | ... | ... | ... | ... | ... |

# FIG. 8

FIG. 9

EP 4 131 093 A1

START

S1
RECEIVE INSTRUCTION TO START
PROCESS AND DESIRED CONDITIONS

S2
PERFORM AUTHENTICATION OF
TARGET PERSON

S3
IS
TARGET PERSON
AUTHENTICATED?

NO → S4
REGISTER USER
INFORMATION OF
TARGET PERSON
AND END PROCESS

YES

S5
ACQUIRE USAGE INFORMATION OF
PAST OF TARGET PERSON

S6
IS USAGE
INFORMATION
ACQUIRED?

NO → S7
END
PROCESS

YES

S8
JOIN ENVIRONMENTAL INFORMATION,
ENVIRONMENTAL FEATURE INFORMATION,
AND BIOLOGICAL INFORMATION WITH USAGE
INFORMATION OF PAST TO ACQUIRE PAST
INFORMATION

S9
QUANTIFY PAST INFORMATION TO ACQUIRE PAST
MULTI-DIMENSIONAL INFORMATION POINTS

S10
DEFINE MULTI-DIMENSIONAL
COMFORTABLE REGION

S11
CALCULATE CENTROID OF PAST
MULTI-DIMENSIONAL INFORMATION POINTS

S12
ACQUIRE USAGE INFORMATION REGARDING
CURRENTLY UNUSED TARGET REGIONS

S13
IS USAGE
INFORMATION
ACQUIRED?

NO → S14
END
PROCESS

YES

①

FIG. 10A

① 1

**S15** COLLECT ENVIRONMENTAL INFORMATION, ENVIRONMENTAL FEATURE INFORMATION, AND BIOLOGICAL INFORMATION REGARDING TARGET PERSON AND CURRENTLY UNUSED TARGET REGIONS TO ACQUIRE CURRENT INFORMATION

**S16** QUANTIFY CURRENT INFORMATION TO ACQUIRE CURRENT MULTI-DIMENSIONAL INFORMATION POINTS

**S17** PERFORM DATA CLEANING ETC. ON CURRENT MULTI-DIMENSIONAL INFORMATION POINTS

**S18** DEFINE FIRST DISTANCE IN MULTI-DIMENSIONAL SPACE AND CALCULATE FIRST DISTANCE BETWEEN MULTI-DIMENSIONAL COMFORTABLE REGION CENTROID AND EACH OF CURRENT MULTI-DIMENSIONAL INFORMATION POINTS

**S19** DEFINE SECOND DISTANCE IN MULTI-DIMENSIONAL SPACE AND CALCULATE SECOND DISTANCE BETWEEN MULTI-DIMENSIONAL COMFORTABLE REGION CENTROID AND EACH OF CURRENT MULTI-DIMENSIONAL INFORMATION POINTS FOR EACH OF REGION INFORMATION ITEMS

**S20** IS DESIRED CONDITION ABSENT?

NO

YES

**S21** DETERMINE ONE OR MORE RECOMMENDED REGIONS BASED ON FIRST DISTANCE

**S22** DETERMINE ONE OR MORE RECOMMENDED REGIONS BASED ON SECOND DISTANCE

**S23** PRESENT ONE OR MORE RECOMMENDED REGIONS, RECOMMENDATION REASON, ETC.

END

# FIG. 10B

| TARGET REGION | DATE | TIME | USER ID | ... |
|---|---|---|---|---|
| SEAT C | DEC. 10, 2019 | 17:00 | 100 | ... |
| SEAT B | JAN. 15, 2020 | 13:00 | 100 | ... |
| SEAT B | JAN. 15, 2020 | 14:00 | 100 | ... |
| SEAT B | JAN. 15, 2020 | 15:00 | 100 | ... |
| SEAT B | JAN. 15, 2020 | 16:00 | 100 | ... |
| SEAT A | JAN. 29, 2020 | 10:00 | 100 | ... |
| SEAT A | JAN. 29, 2020 | 11:00 | 100 | ... |
| ... | ... | ... | ... | ... |

FIG. 11

EP 4 131 093 A1

| TARGET REGION | DATE | TIME | USER ID | TEMPERATURE (°C) | ... | BODY SURFACE TEMPERATURE (°C) | ... | TYPE OF CHAIR | PROXIMITY OF OA EQUIPMENT | ... |
|---|---|---|---|---|---|---|---|---|---|---|
| SEAT C | DEC. 10, 2019 | 17:00 | 100 | 22.1 | ... | 34.3 | ... | DESK CHAIR B | WITHIN 5 m | ... |
| SEAT B | JAN. 15, 2020 | 13:00 | 100 | 20.5 | ... | 34.1 | ... | COUCH C | WITHIN 10 m | ... |
| SEAT B | JAN. 15, 2020 | 14:00 | 100 | 20.4 | ... | 34.2 | ... | COUCH C | WITHIN 10 m | ... |
| SEAT B | JAN. 15, 2020 | 15:00 | 100 | 20.3 | ... | 34.9 | ... | COUCH C | WITHIN 10 m | ... |
| SEAT B | JAN. 15, 2020 | 16:00 | 100 | 20.5 | ... | 34.1 | ... | COUCH C | WITHIN 10 m | ... |
| SEAT A | JAN. 29, 2020 | 10:00 | 100 | 20 | ... | 34.5 | ... | DESK CHAIR A | WITHIN 15 m | ... |
| SEAT A | JAN. 29, 2020 | 11:00 | 100 | 20 | ... | 34.3 | ... | DESK CHAIR A | WITHIN 15 m | ... |
| ... | ... | ... | ... | ... | ... | ... | ... | ... | ... | ... |

FIG. 12

| TEMPERATURE (°C) | ... | BODY SURFACE TEMPERATURE (°C) | ... | TYPE OF CHAIR (DESK CHAIR A) | TYPE OF CHAIR (DESK CHAIR B) | TYPE OF CHAIR (COUCH C) | PROXIMITY OF OA EQUIPMENT | ... |
|---|---|---|---|---|---|---|---|---|
| 22.1 | ... | 34.3 | ... | 0 | 1 | 0 | 1 | ... |
| 20.5 | ... | 34.1 | ... | 0 | 0 | 1 | 2 | ... |
| 20.4 | ... | 34.2 | ... | 0 | 0 | 1 | 2 | ... |
| 20.3 | ... | 34.9 | ... | 0 | 0 | 1 | 2 | ... |
| 20.5 | ... | 34.1 | ... | 0 | 0 | 1 | 2 | ... |
| 20 | ... | 34.5 | ... | 1 | 0 | 0 | 3 | ... |
| 20 | ... | 34.3 | ... | 1 | 0 | 0 | 3 | ... |
| ... | ... | ... | ... | ... | ... | ... | ... | ... |

FIG. 13

EP 4 131 093 A1

FIG. 14A

FIG. 14B

FIG. 14C

FIG. 14D

70

72

71a

TYPE OF CHAIR
(DESK CHAIR A)

D1(SM1)

73

BODY SURFACE
TEMPERATURE

71b3  71b1  71b2

TEMPERATURE

71b

## FIG. 14E

71b

POPULATION
DENSITY

71b4  71b5

D2(SM2)

73

TEMPERATURE

## FIG. 14F

| TARGET REGION | DATE | TIME | USER ID | ... |
|---|---|---|---|---|
| SEAT A | JAN. 30, 2020 | 13:00 | NULL | ... |
| SEAT D | JAN. 30, 2020 | 13:00 | NULL | ... |
| SEAT E | JAN. 30, 2020 | 13:00 | NULL | ... |
| ... | ... | ... | ... | ... |

FIG. 15

EP 4 131 093 A1

| TARGET REGION | DATE | TIME | USER ID | TEMPERATURE (°C) | ... | BODY SURFACE TEMPERATURE (°C) | ... | TYPE OF CHAIR | PROXIMITY OF OA EQUIPMENT | ... |
|---|---|---|---|---|---|---|---|---|---|---|
| SEAT A | JAN. 30, 2020 | 13:00 | NULL | 21 | ... | 34.3 | ... | DESK CHAIR A | WITHIN 15 m | ... |
| SEAT D | JAN. 30, 2020 | 13:00 | NULL | 22 | ... | 34.3 | ... | COUCH C | WITHIN 10 m | ... |
| SEAT E | JAN. 30, 2020 | 13:00 | NULL | 20.5 | ... | 34.3 | ... | DESK CHAIR A | WITHIN 10 m | ... |
| ... | ... | ... | ... | ... | ... | ... | ... | ... | ... | ... |

FIG. 16

EP 4 131 093 A1

| TEMPERATURE (°C) | ... | BODY SURFACE TEMPERATURE (°C) | ... | TYPE OF CHAIR (DESK CHAIR A) | TYPE OF CHAIR (DESK CHAIR B) | TYPE OF CHAIR (COUCH C) | PROXIMITY OF OA EQUIPMENT | ... |
|---|---|---|---|---|---|---|---|---|
| 21 | ... | 34.3 | ... | 1 | 0 | 0 | 3 | ... |
| 22 | ... | 34.3 | ... | 0 | 0 | 1 | 2 | ... |
| 20.5 | ... | 34.3 | ... | 1 | 0 | 0 | 2 | ... |
| ... | ... | ... | ... | ... | ... | ... | ... | ... |

FIG. 17

FIG. 18

EP 4 131 093 A1

FIG. 19

FIG. 20

EP 4 131 093 A1

REGION NAME
SEAT Z

RECOMMENDED REGION

| ITEMS | ITEM VALUE | COMFORT LEVEL [%] |
|---|---|---|
| TEMPERATURE | 20°C | 80 |
| ILLUMINANCE | 450lx | 78 |
| POPULATION DENSITY | 1.2 PERSON /m² | 69 |
| … | … | … |

RECOMMENDATION EXECUTION

| PRIORITY ITEM |
|---|
| TEMPERATURE |
| ILLUMINANCE |
| POPULATION DENSITY |
| … |

81d 81e 81f 81g
81

FIG. 21

EP 4 131 093 A1

**INTERNATIONAL SEARCH REPORT**

| International application No. |
| --- |
| PCT/JP2021/011743 |

**A. CLASSIFICATION OF SUBJECT MATTER**
G06Q 10/00(2012.01)i; G06Q 50/10(2012.01)i
FI: G06Q10/00; G06Q50/10

According to International Patent Classification (IPC) or to both national classification and IPC

**B. FIELDS SEARCHED**

Minimum documentation searched (classification system followed by classification symbols)
G06Q10/00; G06Q50/10

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | US 2017/0293866 A1 (INTERNATIONAL BUSINESS MACHINES CORPORATION) 12 October 2017 (2017-10-12) paragraphs [0002], [0003], [0018], [0027]-[0030], [0047]-[0054] | 1<br>6-8<br>2-5 |
| Y | JP 2011-022716 A (SHIMIZU CORP.) 03 February 2011 (2011-02-03) paragraphs [0011]-[0017] | 6-8 |
| Y | US 2008/0281644 A1 (PAYNE, Andrew) 13 November 2008 (2008-11-13) paragraphs [0042]-[0044] | 7, 8 |
| Y | JP 2016-177775 A (RICOH CO., LTD.) 06 October 2016 (2016-10-06) paragraphs [0015], [0016], [0109]-[0125] | 8 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 31 May 2021 (31.05.2021) | 08 June 2021 (08.06.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

INTERNATIONAL SEARCH REPORT
Information on patent family members

International application No.

PCT/JP2021/011743

| Patent Documents referred in the Report | Publication Date | Patent Family | Publication Date |
|---|---|---|---|
| US 2017/0293866 A1 | 12 Oct. 2017 | (Family: none) | |
| JP 2011-022716 A | 03 Feb. 2011 | (Family: none) | |
| US 2008/0281644 A1 | 13 Nov. 2008 | GB 2459767 A<br>WO 2009/136958 A1 | |
| JP 2016-177775 A | 06 Oct. 2016 | US 2016/0275419 A1<br>paragraphs [0060],<br>[0061], [0154]-[0170]<br>EP 3070654 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014214975 A